# EUROPÄISCHE PATENTSCHRIFT

(11) **EP 1 222 625 B1**
(45) Veröffentlichungstag und Bekanntmachung des Hinweises auf die Patenterteilung: **05.04.2006**
(21) Anmeldenummer: 00943636.1
(22) Anmeldetag: 24.05.2000
(51) Int. Cl.: G06N 1/00

(54) **NEURONALES NETZ ZUM COMPUTERGESTÜTZTEN WISSENSMANAGEMENT**
NEURONAL NETWORK FOR COMPUTER-ASSISTED KNOWLEDGE MANAGEMENT
RESEAU NEURONAL DESTINE A LA GESTION DE CONNAISSANCES ASSISTEE PAR ORDINATEUR

(30) Priorität: 24.05.1999 DE 19923622; 31.08.1999 EP 99116789; 31.12.1999 DE 19964094
(43) Veröffentlichungstag der Anmeldung: 17.07.2002
(73) Patentinhaber: IPCentury AG, 06217 Merseburg (DE)
(72) Erfinder: STEINER, Ralf, CH-9470 Buchs (CH)
(74) Vertreter: Köllner, Malte
(86) Internationale Anmeldenummer: PCT/DE2000/001669
(87) Internationale Veröffentlichungsnummer: WO 2000/072256

(56) Entgegenhaltungen:
- EP-A- 0 378 115
- EP-A- 0 493 292
- US-A- 4 967 369
- US-A- 5 410 716
- US-A- 5 659 666

## Beschreibung

Die Erfindung bezeichnet ein Verfahren für und ein neuronales Netz zum computergestützten Wissensmanagement, basierend auf einem durch einen Computer ausgebildeten neuronalen Netz, insbesondere zur Verwendung in einem über das Internet bedienbaren dezentralen computergestützten Patentwesens im weiteren Sinne. Das neuronale Netz bildet ein System künstlicher Intelligenz (KI) aus, indem es sich über eine zugrundeliegende Wissensbasis in Form von rechentechnisch lesbaren Daten erstreckt. Das neuronale Netz selbst ist vorteilhaft als eine spezielle Art eines vertikal strukturierten neuronalen Netzwerkes ähnlich der Harmonie-Theorie ausgebildet, bei welcher jedem Knoten bzw. Neuron als Element des Netzwerkes eine Bedeutung zugeordnet ist. Jedes Element wird von mehreren gewichteten Verbindungen (Bezügen) zu verschiedenen hierarchisch höheren Elementen bestimmt. In einem weiteren Aspekt unterstützt diese Erfindung alle Nutzer des Patentwesens und sachlicher Dokumentationen bei der Fokussierung, Ausarbeitung und prioritätsbegründenden schutzrechtlichen Hinterlegung ihrer Entwicklung als Innovation.

Wissensmanagement beinhaltet im heutigen Sprachgebrauch die effiziente Verwaltung von Wissen aller Art im Dokumentenmanagement, anfangs von Planungsdaten, Wirtschaftsdaten, Kommunikationsdokumenten und Publikationen in der Form von Textdaten, später über objektorientierte Technologien auch in multimedialer Form. Dazu wird das Wissen über geeignete Gemeinsamkeiten klassifiziert mit dem Ziel verwaltet, eine hohe Redundanz von Anfang an zu vermindern. Automatische Systeme zur Klassifizierung benötigen zumeist textbasierte Dokumente, um mit Hilfe von computergestützten Textsuchmaschinen, allgemein üblichen Textstrukturierungen zur Indizierung, hierarchisch klassifizierten Thesauren und linguistischen Gesetzmässigkeiten auf deren Inhalt schliessen zu können. Letztere bilden die Grundlage heute üblicher selbstklassifizierender Internetsuchmaschine. Die aufgefundenen Assoziationen zwischen den verschiedenen Dokumenten können als Eingabe- und Trainingsdaten für ein neuronales Netz verwendet werden.

Neuronale Netze als solche und speziell zur Klassifizierung von Wissen sind aus der IPC G06F15/18 vorbekannt. Die Druckschrift DE3411168C2 offenbart eine hierarchische assoziative Datenstruktur, vorzugsweise zur Speicherung von Text, die Druckschrift DE4108310C2 ein Verarbeitungssystem für eine Wissensbasis in einem Expertensystem, bei welchem das von einem Benutzer eingegebene Wissen über den Grad des ursprünglichen Zusammenhangs gespeichert ist und das sich daraus ergebende Expertensystem computergestützt über ein Wissensbasis-Verarbeitungssystem von einem Wissensingenieur modifiziert und somit gepflegt wird. In der Druckschrift DE4124501C2 wird eine assoziative Datenstruktur in Form eines neuronalen Netzes und ein zugeordnetes Verfahren offenbart, weiches unter Benutzung einer Metrik zwischen Eingabedaten zu einer eindeutigen Klassifizierung führt. Die Druckschrift DE4400261C1 offenbart, speziell für das Verständnis von geschriebenen Texten, eine assoziative Datenstruktur, welche als künstliches neuronales Netz aufgebaut ist und eine Vielzahl von Netzknoten in aufeinanderfolgenden Schichten enthält, welche speziell ungewichtete Knoteneingänge enthält und deren Knoten in zwei Arten unterteilt sind, wodurch eine wesentliche Redundanzminderung erzielt wird.

Die Lösung der Druckschrift US5901068 analysiert rechnergestützt Patentschriften und andere sachliche Dokumente und erstellt über semantische Textanalysen daraus die enthaltenen Aufgabe-Lösungs-Ansätze.

Die DE19737939A1 zeigt eine selbstkonvergente assoziative Datenstruktur in Form eines neuronalen Netzes zur computergestützten Verwaltungen von Entwicklungen, welche mit den speziellen Beschreibungen der die Wissensmenge bestimmenden Merkmale als Abbildungen von Mitteln in Wirkungen und umgekehrt einen Hilbertraum ausbilden. Diese assoziative Datenstruktur eignet sich für die Verwaltung aller real existierenden Entwicklungen (im Weiteren kurz Entwicklungen), insbesondere auch für technische Entwicklungen, welche Gegenstand des Patentwesen im weiteren Sinne sind. Unter letzterem (im Weiteren kurz Patentwesen) ist das gesamte Wissensmanagement technischer Entwicklungen, angefangen vom Erfinder oder dem mit einem Problem beauftragten Entscheidungsträger, über die damit betrauten Dienstleister bis hin zu hoheitlichen Institutionen zu verstehen, welche in ihrer Tätigkeit im sachlichen Bereich rechentechnisch unterstützt werden sollen.

Aus der Druckschrift US-A-5 659 666 ist ein zweistufiges neuronales Netz mit Rückkopplung bekannt, bei dem in einem trainierten Teilnetz die Netzparameter durch Anregung (z.B. Rauschen) gestört werden und dadurch neue Ausgabemuster erzeugt werden, die Variationen der trainierten Eingaben darstellen. Durch diese Anregungen können somit neue Konzepte erzeugt werden, was der Simulation eines kreativen Vorgangs gleichkommt.

Die Druckschrift EP-A-0 378 115 beschreibt ein neuronales Rechenwerk, bei dem die einzelnen Neuronen als Funktionsblöcke implementiert sind, die über einen gemeinsamen Datenbus Informationen austauschen.

Die die reale Weit beschreibende erkannte Wissensmenge (im Weiteren kurz Wissensmenge) ist in diesem Sinne über Entwicklungen bestimmt, die mengenmässig hierarchisch auseinander hervorgehen. Das Wissensmanagement in dieser Erfindung bezieht sich auf derartige Wissensmengen. Die DE19737939A 1 dient dem Fachmann vorteilhaft zum grundlegenden Verständnis des Aufbaus, des Funktionsprinzips und der Verwendung dieser Erfindung.

Es ist Aufgabe dieser Erfindung, ausgehend und in Weiterbildung des vorbekannten Standes der Technik, Wissensmengen rechentechnisch zu verwalten und gegeneinander zu analysieren. Ein weiterer Aspekt dieser Erfindung besteht in der rechnergestützten Fokussierung, Ausarbeitung und prioritätsbegründenden schutzrechtlichen Hinterlegung einer Entwicklung als Innovation.

Diese Aufgabe wird durch die unabhängigen Patentansprüche im wesentlichen gelöst. Vorteilhafte Ausgestaltungen der computergestützten neuronalen Netzstuktur zur rechentechnischen Realisierung, spezielle Analysewerkzeuge und -verfahren, das Dialogsystem zur Eingabe und zur Ausgabe der Wissensmengen sowie die Hinterlegung einer technischen Entwicklung als Innovation werden in den Weiterbildungen aufgezeigt.

Das Wesen der Erfindung baut auf den hierarchisch auseinander hervorgehenden bezogenen technischen Entwicklungen zugeordneten Wissensmengen auf, welche durch eine geeignete Definition von Teilmengen in Form eines Wechselwjrkungspaares vorteilhaft als < Quantität Qualität > ausgebildet werden, wobei die bezogenen technischen Entwicklungen die Elemente eines neuronalen Netzes darstellen, welches in Verbindung mit rechentechnisch erklärten Neueinträgen (Addition) und Bewertungen (Multiplikation) dieser Elemente einen Hilbertraum ausbildet. Im Übertragenen ist die Beschreibung realer technischen Entwicklungen bzw. diese beschreibenden Wissensmengen an die Beschreibung quantenmechanischer Zustände angelehnt. Die damit als Punktmenge behandelbare Wissensmenge bildet einen Vektorraum aus und weist insbesondere günstige Konvergenzeigenschaften zur rechentechnischen Anwendung des RITZ'schen Verfahrens auf. Die in den Anwendungen bezüglich eines von neuronalen Netz ermittelten Masses über den Elementen statistisch gegebene Konvergenz zum Extremum führt zur einer assoziativen Datenstruktur minimaler Redundanz.

Das neuronale Netz wird rechentechnisch über eine spezielle dynamisch verwaltete assoziative Datenstruktur im Speicher eines Computers realisiert, wozu eine sehr systemnahe Programmierung des diese assoziative Datenstruktur generierenden und verwaltenden Verfahrens notwendig ist, insbesondere muss der Zugriff auf einen linearen Speicherbereich ausreichender Grösse, die Verwendung und Arithmetik von computerspezifischen Zeigern (im Weiteren kurz Zeiger) auf Teile dieses Speicherbereiches und ein für Rekursionen über die assoziative Datenstruktur ausreichend grosser Stack gegeben sein. Dadurch ist es möglich, die Eingabe der notwendigen Elemente, Bezüge, Bewertungen usw. speicher- und rechenzeitoptimiert zur inkrementellen Erweiterung einer assoziativen Datenstruktur zu benutzen, deren Speicherplatzbedarf nur annähernd linear mit der Anzahl der Einträge ansteigt und vorzugsweise weniger als IKB pro Eintrag beträgt. Dadurch ist es möglich, das Wissen eines sehr grossen Wissensgebietes, bspw. der Technik, insgesamt in den mit 32 Bit oder bei sehr grossen Wissensgebieten mit 64 Bit adressierbaren und mit ausgebauten handelsüblichen Servern realisierbaren Speicherbereichen zu erfassen und zu verwalten. Die assoziative Datenstruktur kann über Netze dezentral vernetzt sein. Vorteilhaft beinhaltet jede Entwicklung der assoziativen Datenstruktur zusätzlich einen Verweis auf eine tabellarische Inhaltsdatenbank bspw. für einen Link zu einem Quellendokument, aus welchem das Wissen generiert wurde.

Die Ein- und Ausgabe des neuronalen Netzes zum Nutzer erfolgt über ein intuitives Dialogsystem, mit welchem das in einem Server beinhaltete neuronale Netz über Kommunikationsverbindungen für Daten, insbesondere vorteilhaft einschliesslich des Internets, verbunden ist. Vorteilhaft wird das neuronale Netz selbst ausschliesslich über die Eingabe eines standardisierten streng chronologischen Streams generiert, indem für jedes Element, welches vorteilhaft mit einem zugeordneten eindeutigen Zeitindex identifiziert wird, das zur Definition dienende Wechselwirkungspaar < Quantität |Qualität > geeignet direkt oder indirekt über Zeiger gespeichert, die angegebenen Bezüge zu anderen Elementen gespeichert und generiert sowie vorteilhaft über Zeiger zeitlich rückwärts, optional auch zusätzlich zeitlich vorwärts, verwiesen werden. Jedes neu eingegebene Element ist mit einem anfangs normierten Gewicht bewertet. Günstig ist es, zur Definition eines Elements den Zeitindex zu verwenden sowie das Wechselwirkungspaar und die angegebenen Bezüge nutzerspezifisch gegen Manipulation zu signieren. Vorteilhaft können alle notwendigen Informationen zur Ausgabe wieder in den standardisierten streng chronologischen Stream überführt werden. Dadurch ist die Übertragung auf bzw. die Synchronisation von mehreren neuronalen Netzen über Kommunikationsverbindungen und über eine Verschlüsselung des Streams die Datensicherheit gewährleistet. Insbesondere können halbseitig gespiegelte neuronale Netze diesen Stream zusätzlich zu ihren internen Streams einlesen.

Die Entwicklungssysteme gehen über orientierte Bezüge hierarchisch von einem Wurzelsystem aus, durch Mengenoperationen (OR, AND, NOT) auseinander hervor, wobei das die Entwicklung kennzeichnende Entwicklungssystem über die Teilmenge aller Teilmengen <Quantität| Qualität > der Bezugssysteme festgelegt ist und die Gattung über eine diese beinhaltende Mengenrelation bestimmt ist, bspw. über die Teilmenge aller Vereinigungsmengen von Quantität und Qualität oder die Teilmenge jeweils eines dieser Mengen aller Bezugssysteme. Das Wechseiwirkungspaar < Quantität Qualität > definiert über die verbale Definition die Entwicklung und damit genau die Wissensmenge, welche die Quantität auf die Qualität und umgekehrt die Qualität auf die Quantität abbildet, also innerhalb der Kreuzmenge aller Quantitäten und aller Qualitäten eine Teilmenge ausbildet. Im idealen Grenzfall ist diese Abbildung mathematisch eineindeutig. Diese dem ideal definierten Merkmal zugeordnete Wissensmenge ist notwendig maximal, da im anderen Fall nicht alle zur Gattung gehörenden Quantitäten oder Qualitäten obige Bedingung erfüllen.

Das neuronale Netz ist mit den Elementen zur Definition von Wissensmengen eine assoziative Datenstruktur, welche durch die Eingabe und Modifikation von Bezügen zwischen Entwicklungen ausgebildet und inkrementell erweitert wird, wobei die bereits eingetragenen Entwicklungen rückwärtig zur Definition weiterer Entwicklungen dienen. Die Bildung einer weiteren Entwicklung innerhalb der assoziativen Datenstruktur entspricht der Addition von eingetragenen Elementen unter Neueintrag eines weiteren Elements, welches bezüglich der Merkmale über die Teilmengenbildung und bezüglich des Gewichts über die gewöhnliche Addition über alle jeweils durch die Bezüge bewerteten Gewichte der Bezugselemente definiert ist. Entsprechend ist dieses Gewicht rekursiv über alle Bezüge berechenbar. Das Negativelement ergibt sich jeweils bezüglich eines Elements aus den zugeordneten Ausschlussmerkmalen als NOT-Element mit negativen Gewicht. Das Nullelement ist die < Alles | Nichts > enthaltene Wurzelentwicklung mit dem Gewicht 0. Die Änderung des Status einer Entwicklung ergibt sich indirekt durch eine Bewertung seiner Bezüge und entspricht der Multiplikation mit einer Zahl, welche bezüglich der Bewertung eines Bezugs als die gewöhnliche und bezüglich der Merkmale der Bezugsentwicklung als die Anzahl der Teilmengenbildung mit sich selbst definiert ist, wobei vorteilhaft von der Deutung einer Realisierungswahrscheinlichkeit zur Verwendung dieses Bezugs für eine konkrete Entwicklung ausgegangen wird und die Realisierungswahrscheinlichkeit 0 als gleichwahrscheinlich zu interpretieren ist. Eine Multiplikation mit Eins entspricht somit der Multiplikation mit der Identität und einer mit Null der mit dem Nullelement. Vorteilhaft zur Deutung als Realisierungswahrscheinlichkeit ist eine Abbildung der reellen Zahlen der Bewertung in das Intervall (-1, 1), mit den Bedeutungen: 1= sicher verwendet; -1 sicher nicht verwendet. Der gebrochenzahlige Anteil entspricht einer flächenhaften Reaüsierungswahrscheinlichkeit für eine konkrete Entwicklung.

Die Entwicklungen und die Bezüge bzw. die Bezugsentwicklungen sind über eine Teilmengenrelation in Form eines Wechselwirkungspaares in der Form <Quantität Qualität > bezüglich des Bedeutungsinhalts definiert, wobei diese verbal mit Begriffen vorgenommen ist, die optional über Operatoren AND, OR, NOT verknüpft sind. Die Teilmengenrelation jedes Elements bestimmt für eine Entwicklung ein Entwicklungssystem < Lösung Aufgabe >, bestehend aus einem konkretisierten oder der Kombination mehrerer Bezugssysteme < Mittel Wirkung > als Merkmale. Die Elemente beinhalten oder sind mit tabellarischen Datenbanken verknüpft, welche die verbale Definition, den Index der Bezugselemente, den Zeitindex, den Nutzerindex sowie optional den Kurztitel, die Kurzbeschreibung und weitere den Elementen zugeordnete unveränderbare Angaben beinhalten.

Für die Ein- und Ausgabe der Wissensmengen wird über das Dialogsystem mit dem Nutzer im wesentlichen mit den verbalen Wechseiwirkungspaaren und der sich aus den bezogenen Entwicklungen ergebenden assoziative Datenstruktur operiert, zur Analyse und Verwaltung im neuronalen Netz selbst im wesentlichen mit den zugeordneten Koordinaten, welche sich durch die Bezüge der Entwicklungen sowie aus deren Bewertung durch die Abbildung der dynamischen assoziativen Datenstruktur des neuronalen Netzes im Hilbertraum ergeben. Demnach werden bei der Analyse und Verwaltung auch Wissensmengen berücksichtigt, die keine direkten Bezüge zueinander haben, wenn ihre Koordinaten den Analyse- bzw. Verwaltungsbedingungen genügen. Dadurch ist es computergestützt möglich, alle von dem neuronalen Netz erfassten Wissensmengen gleichermassen und eindeutig zu verwalten und zu analysieren. Jede einer bezogenen Entwicklung zugeordnete Wissensmenge ist über sein Element des neuronalen Netzes durch genau einen Koordinatenvektor charakterisiert, welcher vorteilhaft diesen direkt oder verknüpft zugeordnet und somit Teil des Elements ist. Die Wissensmengen können rechentechnisch vom neuronalen Netz neben den Bezügen zueinander auch über ihre Koordinaten verwaltet werden, welche insbesondere die Grundlage für gegenseitige Analysen darstellen. Als Analysemethoden werden in der Vektorrechnung übliche Methoden (Prüfung ob innerhalb einer Kugel, innerhalb eines Raumwinkelbereiches, Projektion auf bestimmte Vektoren) angewandt, die insbesondere auf der Berechnung eines Skalarprodukts basieren. Die Berechnung von Vektoren bzw. Wissensmengen mit bestimmten Eigenschaften ist möglich bspw. über die Orthogonalität mit Hilfe des SCHMIDT'schen Verfahrens. Vor der Berechnung können optional Filter bestimmte Elemente ausblenden oder umgewichten. Dadurch sind insbesondere ähnliche Entwicklungen (Raumwinkel), naheliegende Entwicklungen (Kugel), Entwicklungsschwerpunkte (Häufungen), Entwicklungsfreiräume (Leerstellen), Entwicklungsumgehungen (Orthogonalisierungen), Trends (mittlerer Raumwinkel der Folgeentwicklungen der Kugel um Häufungen) usw. über die Gesamtheit der Wissensbasis oder über speziell gefilterte Teilmengen möglich, bspw. zur Konkurrenzanalyse.

Jeder mit dem neuronalen Netz kommunizierende Nutzer ordnet bei der Angabe oder bei der Bewertung von < Quantität | Qualität > auf Basis seines persönlichen Wissens eine konkrete Entwicklung dieser Wissensmenge zu oder nicht, wobei er zumindest unbewusst bestrebt ist, ein bestimmtes sich aus dem Anwendungsfall ergebendes Mass zu extremieren. Diese Zuordnungen bilden die trainierenden Eingabedaten des neuronalen Netzes. Sie weisen naturgemäss jeweils nur einen geringen Informationsgehalt und untereinander eine hohe Redundanz auf. Das neuronale Netz bildet sich bei jeder Eingabe und Bewertung bezüglich seiner assoziativen Datenstruktur dynamisch um. Dadurch wird von dem neuronalen Netz über sehr viele Eingaben verschiedener Nutzer die beschriebene Wissensmenge statistisch unabhängig aufakkumuliert und "rauschgemindert", indem eine wiederholt gleichartig zugeordnete Entwicklung diese notwendig konkretisiert. Über gerichtete Bezüge auf bereits eingetragene Bezugsentwicklungen werden die diese definierenden Wissensmengen miteinander verknüpft und begrenzen somit die beschriebenen Wissensmengen der Entwicklung. Eine Konkretisierung der Wissensmenge der Bezugsentwicklungen führt dadurch auch zu einer Konkretisierung der anfänglich nur durch die Bezugsgattung begrenzten Wissensmenge der Entwicklung selbst.

Da ein idealeres Wechseiwirkungspaar notwendig eine höhere flächenhafte Wahrscheinlichkeit aufweist, dass eine konkrete Entwicklung innerhalb der Teilmenge statt nur innerhalb einer der diese bildenden Mengen beinhaltet ist, wird dieses nach einer Akkumulation höher bewertet sein. Je konkreter eine Entwicklung definiert, bzw. eine Frage gestellt wurde, um so höher wird statistisch deren Bewertung und die Qualität, bzw. der Aussagegehalt der Antwort sein. Hohe Bewertungen korreiieren statistisch mit hohen absoluten Massen. Neu eingetragene Entwicklungen befinden sich notwendig am Ende der assoziativen Datenstruktur bzw. auf dem Rand eines Hilbertraumes. Durch die für Neueinträge oder Anfragen vorteilhafte und deshalb statistisch vom Nutzer angestrebte hohe Bewertung, welches einer funktionalen Zielfunktion über einem Ende der assoziativen Datenstruktur dem Rand eines Hitbertraumes als Mass entspricht ist statistisch eine Konvergenz zu diesem Extremum gegeben. Entsprechend des RITZ'schen Verfahrens konvergiert die zugrundeliegende assoziative Datenstruktur als solche zu der notwendig existierenden idealen Klassifikation des Wissens. Deshalb eignet sich dieses neuronale Netz nebenbei als Basis eines sich stets dynamisch dem Wissenstand anpassenden automatischen Klassifizierungssystem, indem dieses aus den Hauptbezügen der Netzstruktur generiert wird.

Die Angabe des Bezugs schränkt jedes definierte Wechselwirkungspaar auf die Menge eines jeweiligen Bezugsystems ein, welches optional auch die Gattung der Entwicklung festlegt. Dabei ist ein idealer Bezug gleichwertig mit einem idealen Bezugssystem, welches mit allen Wechselwirkungspaaren eineindeutig bestimmt ist, also der Qualität eindeutig die Quantität und umgekehrt zugeordnet ist. Bei den in der Praxis auftretenden realen Bezügen ist dies üblicherweise nicht gegeben, jedoch ist die Wahrscheinlichkeit, dass bezüglich aller Bezüge mit einem gegebenen beinhalteten Begriff eine konkrete Realisierung von der Wissensmenge des Bezugssystems Gebrauch macht, bei idealen Bezügen maximal. In diesem Sinne konvergiert über die Vielzahl der Eingaben und Bewertungen die assoziative Datenstruktur zum wahren Sachverhalt, welcher durch ideale Bezüge bzw. idealen Systeme ausgebildet ist und keine Redundanz aufweist, ohne diesen jemals zu erreichen. Die Bezüge sind vorteilhaft normiert gewichtet und mit einem, optional durch Wahrscheinlichkeitsangaben Fuzzy basierenden, Status versehen, welcher optional selbst aus mehreren nach Wahrscheinlichkeiten gewichteten normierten Bezügen besteht. Dadurch können verschiedenartige Bewertungsgruppen gefiltert und umgewichtet werden.

Vorteilhaft wird die Entwicklung bzw. das Element mit einem Kurztitel versehen. Es ist auch zur Verbesserung der Lesbarkeit für den Nutzer günstig, eine Kurzbeschreibung der konkret angedachten und in der Wissensmenge beinhalteten Entwicklung beizufügen. Ebenso ist es günstig, neue definierende Quantitäten bzw. Qualitäten auf der Basis der durch angegebene Bezüge vorbekannten Quantitäten bzw. Qualitäten begrifflich festzulegen, wobei logische Operatoren AND, OR, NOT verwendet werden können. Dadurch wird nebenbei vom neuronalen Netz automatisch je ein Thesaurus für Quantitäten bzw. Qualitäten generiert, welcher diese Begriffe hierarchisch strukturiert und entsprechend des Gewichts der sie verwendenden Elemente bewertet beinhaltet.Des weiteren kann in diesen Beschreibungen und Definitionen, welche die Wissensbasis des neuronalen Netzes darstellen, in üblicher Weise textorientiert und über linguistisch sinnvolle Verknüpfungen im Kontext nach Begriffen recherchiert werden. Dazu wird vorteilhaft je eine rechts- und linkgeordnete indizierte Liste mit Verweis auf den Zeitindex des Elements oder ein Zeiger auf diesen generiert, welcher den Begriff beinhaltet. Mehrsprachigkeit kann dabei berücksichtigt werden. Ebenso ist es denkbar, basierend auf einer Analyse der Syntax und Semantik in den Definitionen jedes Wechselwirkungspaars, verbunden mit den beiden Thesauren für die Begriffe der Quantität bzw. der Qualität, diese verbalen Definitionen mit einer signifikant hohen Wahrscheinlichkeit in mathematisch logische Terme von Begriffen zu transformieren, welche schliesslich rekursiv über die Bezugselemente rechentechnisch aufgelöst werden, um vereinfachte Definitionen zu erhalten oder Widersprüche zu selektieren. Vorteilhaft werden alle Elemente dynamisch gespeichert und über eine über Zeiger verkettete Liste dynamisch verwaltet. Jedes Element besitzt ein eindeutig zugeordnetes NOT-Element, welches vorteilhaft durch einen Zeiger auf dasselbe Wechselwirkungspaar verwaltet wird. Das NOT-Element bezeichnet genau die von der Wissensmenge des zugeordneten Elements ausgeschlossene Wissensmenge, welche bspw. bei der Bildung von Elementen mit Alternativen unter Nutzung der DE MORGAN'schen Formeln oder bei Ausschliessungselementen benötigt wird. Es ist günstig, bei der Generierung eines Elements sogleich das zugeordnete NOT-Element zu generieren. Dieses kann günstig über ein Flag, bspw. das LSB des Zeitindex vom zugeordneten Element unterschieden werden.

Die Generierung der Bezüge selbst erfolgt günstig über eine Intervallschachtelung zur Ermittlung des dem Zeitindex in der konkreten assoziativen Datenstruktur zugeordneten Speicherbereiches des Bezugselements und der ein bzw. wechselseitigen Verkettung dieser über Zeiger. Die jedem einzelnen Element optional zugeordneten Rückwärts- bzw. Vorwärtsbezüge selbst werden vorteilhaft wiederum über dynamische Listen verwaltet. Die Bezüge selbst wiederum werden vorteilhaft mit dynamisch gespeicherten Bewertungen versehen, welche wiederum über dynamisch verkettete Listen verwaltet werden. Die Bewertungen sind vorteilhaft nutzerspezifisch, wodurch günstig eine gleichartige und eine statistisch abhängige Mehrfachbewertung vermieden wird. Eine binäre Bewertung ist speichertechnisch günstig über das LSB des eindeutigen Nutzerindex realisierbar. Ein mögliches Bewertungsgewicht kann optional über den Nutzerindex ermittelt und berücksichtigt werden.

Über die bei der Eingabe bzw. Bewertung zugeordneten Zeitindizes sind eindeutige und belegbare Zuordnungen des Nutzers zu einem Eintrag gegeben, Manipulationen (zeitliche Häufungen) zur Bewertung selektier- und unterdrückbar (Zeitsperre) sowie über eine, vorteilhaft exponentielle, zeitliche Abklingfunktion der Bewertungen ein evolutionäres Verhalten der assoziativen Datenstruktur realisierbar. Der Koordinatenvektor jedes Elements kann rekursiv über die Vektoraddition aller mit dem jeweiligen Gewicht bewerteten Koordinatenvektoren der Bezugselemente ermittelt werden. Es ist jedoch zur Optimierung von Rechenzeit vorteilhaft, diesen in einem temporären dynamischen Speicherbereich zu verwalten, auf dessen Beginn oder Ende ein Koordinatenzeiger des Elements verweist. Für den vorteilhaft wiederum als dynamisch verkettete Liste aufgebauten Koordinatenvektor ist es wiederum zur Minimierung des benötigten Speicherplatzes vorteilhaft, nur die jeweils notwendigen Koordinaten mit und geordnet nach ihrem Index abzuspeichern. Entsprechend der verwendeten und im neuronalen Netz implementierten Definition für eine Metrik, Norm und Skalarprodukt - es eignen sich bspw. die euklidischen für den n-dimensionalen Raum, wobei jede Neuentwicklung eine neue Dimension eröffnet - können diese für die Analyse und Verwaltung wichtigen Grössen rechentechnisch einfach berechnet werden. Es ist günstig, die Norm jedes Elements mit diesem temporär zu speichern.

Beinhaltet ist dieses neuronale Netz zum Wissensmanagement insbesondere in einem zentraler Server, welcher für die Mehrzahl der Nutzer über das Internet kostenfrei oder optional über Einbindung eines sicheren e-Commerce Systems für Informations- und Finanzdienstleitungen kostenpflichtig zur Verfügung steht und entsprechende sachliche Einträge oder Anfragen zu Wissen bedient. Der zur Eingabe dienende chronologische Stream wird bei der Benutzung des neuronalen Netzes durch einen Nutzer vom Dialogsystem generiert, indem dieser bspw. einzutragende Wissensmengen über die Eingabe von bezogenen Entwicklungen definiert, auf Entwicklungen bezogene Anfragen an das neuronale Netz stellt, neue Bezüge angibt oder Bewertungen vornimmt. Da die assoziative Datenstruktur selbst durch den eingegebenen chronologischen Stream stets verändert wird ist es günstig, allen optionalen temporären Datenbereichen der verschiedenartigen Listenelemente den Zeitindex ihrer letzten Berechnung zuzuordnen. Dadurch muss die bei einer Änderung notwendig werdende rekursive Neuberechnung nur über die wirklich veränderten Bereiche der assoziativen Datenstruktur ausgeführt werden, was die benötigten Berechnungsschritte minimiert. Dazu wird der Berechnungszeitindex mit den jeweilig zugeordneten Zeitindizes dieser Datenbereiche verglichen. Es ist vorteilhaft, für einzelne, vom aktuellen Berechnungszeitindex abweichende Berechnungszeitindizes, bspw. für spezielle Berechnungen in der Vergangenheit, die Benutzung der temporären Datenbereiche auszuschliessen, also die gesamte assoziative Datenstruktur rekursiv zu berechnen.

Das Verfahren geht von einer Vielzahl von Eintragungen bzw. Bewertungen aus, welche von einer Vielzahl von Nutzern erweiternd und trainierend in die assoziative Datenstruktur des neuronalen Netzes eingetragen werden und diese somit über derartige Eingaben modifizieren. Das neuronale Netz selbst stellt über die implementierten Operatoren die Konvergenz der assoziativen Datenstruktur sicher und führt Verwaltungen und Analysen aus. Im übertragenen Sinn wird durch das neuronale Netz der durch unsachliche Angaben "verrauschte" Eingabestrom von verschiedenen Nutzern statistisch zum wahren Sachverhalt geringer Redundanz verdichtet und letztendlich ein Expertensystem ausgebildet sowie vom neuronale Netz Analysen von Entwicklungen im Hilbertraum der Elemente durchgeführt, die als Punkte betrachtet werden und Koordinaten aufweisen. In einem ersten Schritt wird die Entwicklung durch Bezüge zu einem oder mehreren nächstliegend erscheinenden Bezugssystemen über Wechselwirkungspaare festgelegt und vom neuronalen Netz als Element im Raum der Entwicklungen eingetragen. In einem weiteren Schritt wird durch eine Entscheidung eines weiteren Nutzers über die Zuordnung eines neuen Bezugs oder die Bewertung über die sachliche Richtigkeit des Bezugs der Status dieses Bezugs geändert und damit eine weitere trainierende Eingabe für das neuronale Netz erzeugt. In einem weiteren Schritt, welcher durch eine Vielzahl von Nutzern eine Vielzahl vorstehender Schritte zu jeweils zugeordneten Entwicklungen beinhaltet und demnach eine Vielzahl statistisch unabhängiger Eingabedaten darstellt, werden die Bezüge der assoziativen Datenstruktur vom neuronalen Netz sukzessive angepasst und das neuronale Netz dynamisiert, welches statistisch zu den idealen Bezügen konvergiert und somit ein Expertensystem ausbildet, welches eine sinkende Redundanz aufweist. In einem weiteren Schritt werden zum Zwecke der Verwaltung und Analyse vom neuronalen Netz Operationen von Mengen im Raum der Entwicklungen durchgeführt oder überwacht, wodurch Definitionsbereiche der Wissensmengen festgelegt und Masse zwischen einzelnen Entwicklungen berechnet werden. Die Masse werden derart definiert, dass sie im jeweiligen Anwendungsfall auf Grund von Gesetzmässigkeiten der Realität einer statistisch notwendigen Konvergenz zu einem Extremum unterliegen.

Es ist vorteilhaft, den Nutzer bereits während der verbalen Formulierung des Wechselwirkungspaares des Eintrags bzw. der Anfrage mit Recherchenergebnissen aus der Wissensbasis zu gerade eingetragenen Begriffen zu informieren, auf welche der Nutzer anschliessend gegebenenfalls Bezug nehmen wird. Dadurch wird die assoziative Datenstruktur stets etwas erweitert und das neuronale Netz trainiert. Letzteres wird günstigerweise über eine implizite positive Bewertung der Wissensmenge einer angegebenen Bezugsentwicklung realisiert, da eine Bezugnahme eine subjektiv positive Bewertung der durch das Wechselwirkungspaar beschriebenen Entwicklung darstellt. Des weiteren sind explizite Bewertungen, vorzugsweise binäre, und die Angabe weiterer Bezüge durch dritte Nutzer möglich und günstig für das Training des neuronalen Netzes. Bei besonderer Berechtigung, bspw. auf Grund einer Qualifikation oder hoheitlicher Berufung als Professor oder Prüfer, kann eine Bewertung mit einem prüferspezifisch höheren Bewertungsgewicht (im weiteren Prüfung) erfolgen. Zur optionalen manuellen Prüfung einer Entwicklung durch einen Nutzer wird vorteilhaft die Gesamtheit der Bezugsentwicklungen daraufhin geprüft, ob nach subjektiver Wertung des Prüfers die Entwicklung in den einzelnen Wissensmengen der Bezugsentwicklungen enthalten ist, also von deren Lehren Gebrauch macht. Die Wirkung der Bewertungen spezieller Länder, Ämter, Prüfer, Nutzer usw. können optional nachträglich über spezielle Filter unterschiedlich umgewichtet werden.

Für Dienstleister günstig sind erweiterte Analysmöglichkeiten und für grössere Firmen separate neuronale Netze, die mit dem zentralen neuronalen Netz über eine Kommunikationsverbindung verbunden und optional halbseitig gespiegelt sind. Hoheitliche Strukturen besitzen vorteilhaft neben der Prüfungsberechtigung spezielle, auf das jeweilige Spezialwissensgebiet zur Beschreibung der realen Welt angepasste, Systeme bspw. für Patentwesen, Makroökonomie, Marketing und Gentechnik. Im weiterbildenden speziellen Anwendungsfall der Genanalyse werden Gensequenzen mit den zugeordneten erkannten Biofunktionen eingelesen, in der Makroökonomie Einzelwirtschaften und zugeordnete Tätigkeitsfelder und in der Marktanalyse Produkte und zugeordnete Kundenbedürfnisse. Das zur Konvergenz dieser hierarchisch auseinander hervorgehenden Entwicklungen entsprechend dem RITZ'schen Verfahren notwendige extremale Funktional als Mass ist als Gesetzmässigkeit der Realität entsprechend durch die sich aus der Neugier des Menschen über den Erfindergeist ergebende absolute "Erfindungshöhe", durch die sich aus der Triebkraft der Natur im Überlebenskampf ergebende biologische Evolution, durch das sich aus der Gesellschaftsordnung des Menschen ergebende Streben nach finanziellem Reichtum und die sich aus der Trägheit des Menschen ergebenden Lebensansprüche gegeben.

Der zur Eingabe dienende Stream kann zur Eingabe eines Nutzers über ein Dialogsystem alternativ oder vorteilhaft ergänzend auch im Preprozessing aus Inhaltsdatenbanken generiert werden, in welchen Wissen von bezogenen Entwicklungen verborgen beinhaltet ist und welche durch ihre weitgehend einheitliche Strukturierung und spezifische Formulierung dieses Wissen mit einer hinreichenden Signifikanz über eine computergestützte automatische Projektion aus ihrem Kontext in das Format des Streams zu konvertieren ermöglichen. Als besonders geeignet sollten sich Patentdokumentationen im Textformat erweisen, wobei dem angegebenen Stand der Technik, der Aufgabe und dem Wesen der Erfindung bzw. dem kennzeichnenden Teil der Schutzansprüche mit ihren typischen Formulierungen, sowie deren anzahlmässige Zuordnung zu insbesondere niedrigen Bezugsnummern eine besondere Bedeutung zukommt. Es ist vorteilhaft, bereits beim Preprozessing die gewöhnlichen Recherchenmöglichkeiten und den Thesaurus über der Wissensbasis des neuronalen Netzes zu benutzen, um die entsprechend signifikanten Textstellen herauszufiltern. Diese sollten bezüglich ihrer Begriffe stets ein hohes Konkretisierungsniveau aufweisen. Ebenso ist es günstig, derartiges Wissen mit einem Verweis auf den zugrunde liegenden Inhalt einer Inhaltsdatenbank, bspw. die Patentnummer, zu versehen sowie den zuerkannten Zeitrang zu vermerken, was insbesondere bei Analysen im Patentwesen nützlich ist. Eine weitere Quelle zur automatischen Generierung von Streams sollten die Patentklassifikation und Fachlexika darstellen.

Zur Verwendung im Patentwesen, bei weichem Wissen bzw. Entwicklungen verwaltet werden, die in Patenten, Gebrauchsmustern oder techn. Druckschriften offengelegt sind oder optional Schutzrechte darstellen, nimmt das neuronale Netz zumindest unterstützend eine computergestützte Prüfung, amtliche Verwaltung, Überwachung, Pflege, Recherche oder Aufarbeitung des Weltwissens in einem Klassifizierungssystem vor und ist als sachüches Expertensystem üblichen tabellarischen Datenbanken zum Patentwesen übergeordnet und vorteilhaft mit diesen verknüpft. Dazu werden durch den Erfinder als Nutzer zur Definition seiner als Wechseiwirkungspaar definierten Entwicklung Bezüge angegeben und in der assoziativen Datenstruktur computergestützt verwaltet, denen Teilaufgaben zugeordnet sind, welche der Erfinder endgültig oder nachträglich aus dem Pool der ursprünglichen Kurzbeschreibung festlegt, die über ein Wechselwirkungspaar ein Bezugssystem bestimmen und rückwärtig zur Definition von weiteren Bezugssystemen verwendet werden, wobei sich der Schutzbereich des Entwicklungssystems aus der Teilmenge aller Bezugssysteme bestimmt. Dabei wird automatisch vom neuronalen Netz über Funktionale des Hilbertraumes und der Zeitindizes eine "Erfindungshöhe" und eine "Neuheit" zwischen einzelnen oder allen eingetragenen Entwicklungen berechnet und dazu der Status jedes einzelnen Bezugs berücksichtigt. Durch Angaben Dritter oder amtlicher Prüfung als zusätzliche Eingabe für das neuronale Netz wird die assoziative Datenstruktur inkrementell erweitert oder modifiziert, wobei die Entwicklung des aktuellen Wissensstandes bei der sachlichen Prüfung mit der Zeit zur Redundanzsenkung führt.

Besonders für Anwendungen im Patentwesen ist es vorteilhaft, zur Problematik der Geheimhaltung eine entsprechende Verschlüsselung, Identifizierung des Berechtigten und Authentifizierung der Eingaben über implementierte kryptologische Verfahren sicherzustellen. Mit dem beim Eintrag angelegten eindeutigen Zeitindex und einem eindeutigen Nutzerindex kann vorteilhaft mit diesen beiden Indizes die Authentizität der Definition und der Bezüge gewährleistet und diese optional verschlüsselt werden. Eine Offenlegungsschonfrist könnte über einen entsprechenden Zeitfilter bei der Ausgabe gewährleistet werden. Das Wissen eines Schutzrechts bzw. eines Anspruchs könnte als Kopie mit unveränderbaren abschliessenden Bezügen mit einem besonderen Flag gekennzeichnet werden. Eine Unterteilung der Elemente in Dokumente und Urkunden ist vorteilhaft, wobei die Urkunden zu einem bestimmten Zeitpunkt als Kopie aus einzelnen Dokumenten hervorgehen und die Bezüge der Urkunden einen zeitweise konstanten Status und optional die Datenbanken der Urkunden eine Verknüpfung mit Registern und/oder einen eindeutigen Verweis auf Inhaltsdatenbanken aufweisen, wobei optional Urkunden, die sich über Bezüge auf andere Entwicklungssysteme beziehen, abhängige Urkunden gleichen Zeitrangs der Urkunden darstellen. Urkunden nehmen demnach nur indirekt über die Dynamik ihrer Bezugsdokumente an der Dynamik der assoziativen Datenstruktur teil, bezüglich ihrer Bezüge sind sie eingefroren, wodurch unter Ausschluss einer rückwärtigen Betrachtungsweise die aktuell konkretisierte assoziative Datenstruktur benutzt werden kann. Bezüglich eines derartigen Schutzrechtswissens ist zu einem gegebenen Zeitindex gegenüber der assoziativen Datenstruktur optional eine rechentechnisch definierte sachliche "Neuheit" bezüglich des resultierenden logischen Terms der definierenden Begriffe der Gesamtheit der signifikanten Bezüge sowie eine rechentechnisch definierte sachliche "Erfindungshöhe" über Funktionale wie dem Skalarprodukt berechenbar, bspw. als orthogonaler Abstand vom Trend aller nächstliegenden Entwicklungen, ohne eine abschliessende Aussage über diese Rechtsbegriffe zu treffen. Für Schutzrechtswissen wäre des weiteren ein Verweis auf das zugeordnete Schutzrecht oder das amtliche Register mit dem Rechtsstand sinnvoll.

Neben dem neuronalen Netz aus aufeinander bezogenen und gewichteten Elementen, welches rechentechnisch als assoziative Datenstruktur dynamisch im linearen Speicherbereich eines Rechners angelegt ist, wobei jedem Element als Bedeutungsinhalt eine Definition einer Entwicklung zugeordnet ist, diese Definition über eine Mengenrelation eines Wechselwirkungspaares, vorzugsweise in der Form < Qualität Quantität >, verbal die Entwicklung und damit die Wissensmenge definiert und diese Elemente vorzugsweise einen Hilbertraum ausbilden, ist die elementenweise Zuordnung von ergänzenden verbalen Textfeldern vorteilhaft, welche den Bedeutungsinhalt der Wissensmenge obiger Definition kurz erläutern und schlagwortartig verkürzt darstellen.

Diese ergänzenden Textfelder sind bereits bei der Kl-Recherche über der assoziativen Datenstruktur hilfreich, da sie über die Nutzerschnittstelle des Rechners den Nutzer bei der Auswahl entsprechend signifikanter Bezüge zur Definition der zu recherchierenden Entwicklung unterstützen, welche die primäre Suchanfrage für das Kl-System bilden. Nach jeder KI-Recherche liefert das neuronale Netz in Echtzeit die zugeordneten naheliegenden und ähnlichen Entwicklungen und schätzt rechentechnisch eine prinzipielle Neuheit und Erfindungshöhe ab. Zur Entwicklung einer Innovation passt der Nutzer vorteilhaft sukzessive die Definition der Bezüge seiner Entwicklung derart an, dass sie eine möglichst umfassende Wissensmenge mit möglichst wenig Bezügen bei gleichermassen hoch bewerteter Erfindungshöhe und absoluter Neuheit ergeben. Damit fokussiert der Nutzer seine Innovation auf ein aussichtsreich erscheinendes Wissensgebiet.

Da jede Entwicklung als Element der assoziativen Datenstruktur über signifikant gewichtete Bezüge auf die, die einzelnen Merkmale der Entwicklung definierenden, vorbekannten Bezugsentwicklungen verweist, kann rekursiv die Definitionsstruktur einer Entwicklung aufgelöst werden. Durch eine vorteilhafte Dynamik der Datenstruktur, welche durch ständige Benutzung zu geringer Redundanz und damit zu einem höheren Wahrheitsgehalt konvergiert, folgt diese Definitionsstruktur weitestgehend dem aktuellen vorbekannten Wissensstand. Die Definitionen der Bezugsentwicklung erster Ordnung (Eltem) sollten im allgemeinen zur ausreichenden Offenbarung des verwendeten Wissensstandes für einen späteren Nachnutzer der Entwicklung als Innovation hinreichen, es können jedoch auch die Definitionen der Bezugsentwicklung zweiter Ordnung (Grosseltern) und weiterer Ordnungen verwendet werden. Damit wird der Nutzer bei der Ausarbeitung einer Schutzrechtsanmeldung mit ausreichendem Offenbarungsinhalt unterstützt.

Die verbalen Definitionen der Wechselwirkungspaare der Mengenrelation, vorzugsweise in der Form < Mittel Wirkung >, in Verbindung mit erläuternden und schlagwortartig verkürzten Textfeldern erlaubt in Verbindung mit dem prinzipiell einheitlichen Aufbau einer Schutzrechtsanmeldung und entsprechender Standardfloskeln sowie den Angaben zur Identifikation und der Adresse des Nutzers die rechnergestützte Generierung einer Schutzrechtsanmeldung mit allen wesentlichen Bestandteilen wie Antrag mit Bezeichnung des Anmelders/Erfinders und der Adresse, Beschreibung mit Kurztitel. Stand der Technik, Aufgabe, Lösung, Ausführungsbeispiel sowie der Ansprüche und der mancherorts erforderlichen Kurzfassung. Die durch die rechnergestützte Generierung der provisorischen Anmeldung fehlerhafte Grammatik ist bezüglich einer prioritätsbegründenden sachlichen Hinterlegung der Innovation unschädlich. Eine derartige provisorische Anmeldung kann über moderne Telekommunikationsmittel wie FAX und falls später möglich über Datenverbindungen unverzüglich bei den entsprechenden Schutzrechtsannahmestellen prioritätsbegründend angemeldet werden. Eine Unterschrift ist dafür nicht sofort erforderlich, kann aber bedarfsweise durch eine elektronische Unterschrift ersetzt werden. Zur Begründung des Anmeldetages bedarf es keiner Gebührenzahlung, so dass im Bedarfsfall unter Inanspruchnahme der Priorität dieser provisorischen Anmeldung eine den üblichen Gepflogenheiten entsprechende Nachanmeldung innerhalb eines Jahres getätigt werden kann. Dafür wird eine optionale Veröffentlichungsschonfrist des Entwicklungseintrags in der Datenstruktur bis zu 18 Monaten vorgesehen und diese bis zu diesem Zeitpunkt auf den Nutzer personifiziert sicher verschlüsselt abgelegt.

Weitere vorteilhafte Weiterbildungen der Erfindung bestehen in der Ausführung der Textfelder als:
- KS: Kurztitel (der Entwicklung)
- KB: Kurzbeschreibung (der Entwicklung)
   und der Ausführung der verbalen Definition der Mengenrelation der Wissensmenge
   < Lösung Aufgabe > als:

- KL: Kurzlösung (der Entwicklung)
- LD: Lösungsdefinition (der Lösung)
- KA: Kurzaufgabe (der Entwicklung)
- AD: Aufgabendefinition (der Aufgabe)

Vorteilhaft wird diese Erfindung integriert in ein rechnergestütztes und über lnternet/lntranet zugängliches und gegebenenfalls über e-commerce entgeldlich abrechenbares Wissensmanagementsystem für Recherchen und Analysen im sachlich-technischen Bereich, insbesondere für Patentdokumente. Der Nutzer mit einer gedanklichen Realisierung in Form einer konkreten Entwicklung bedient dieses Wissensmanagementsystem in nachfolgenden groben Schritten:
- Der Nutzer überlegt, welches Aufgabe der Lösung Ihrer Realisierung zugeordnet ist.
- Der Nutzer trägt eine geeignete Kurzbezeichnung für das Aufgabe und die Lösung ein.
- Der Nutzer definiert beide Kurzbezeichnungen mit einfachen verbalen Satzsequenzen.
- Das Wissensmanagementsystem bietet dem Nutzer dazu eine Auswahl vorbekannter Entwicklungen an, wobei textlich übereinstimmende Begriffe hervorgehoben sind.
- Wenn die Realisierung des Nutzers auf einzelnen angebotenen Entwicklungen basiert, setzt dieser zur Definition der Begriffe in Aufgabe und Lösung mittels Markierung einen Bezug auf diese.
- Das Wissensmanagementsystem verfeinert im vorhergehenden Schritt sukzessive die Auswahl und der Nutzer die Definition.
- Das Wissensmanagementsystem bestimmt über die KI-Recherche die Lage der Entwicklung im Wissensraum und berechnet mathematisch exakt naheliegende und ähnlich Entwicklungen. Das Wissensmanagementsystem zeigt dem Nutzer die nähere Entwicklungsumgebung an, ermöglicht das Wandern über deren Bezüge, die vollständige Anzeige aller Textfelder und gibt optional einen Link auf die Quelldokumente der jeweiligen Entwicklungen, bspw. auf Patentdokumente.
- Über die Berechnung einer absoluten Neuheit und einer Erfindungshöhe kann der Nutzer das Innovationspotential abschätzen und gegebenenfalls über eine Neudefinition die Entwicklung verändern.
- Ergänzend zu obiger Recherche gibt der Nutzer optional: Titel und Kurzbescheibung seines Eintrags sowie seine persönliche Identifikation und Adresse ein, um seine Urheberschaft zu sichern und eine prioritätsbegründende provisorische Schutzrechtsanmeldung zu ermöglichen. Das Wissensmanagementsystem trägt diesen Eintrag individuell verschlüsselt in die Datenbasis ein, wobei dieser Eintrag erst nach Ablauf einer Offenlegungsschonfrist öffentlich verfügbar wird. Anschliessend erfolgt optional die rechnergestützte Generierung einer provisorischen Schutzrechtsanmeldung und deren unverzügliche Übermittlung zu den Schutzrechtsannahmestellen.
- Das Wissensmanagementsystem ermöglicht des weiteren rechnergestützt verschiedene im Patentwesen übliche Analysen von Entwicklungen zueinander, insbesondere über Entwicklungen aus rechtsbeständigen Schutzrechten auch eine Unterstützung für Schutzrechtsverletzungsanalysen.

Die Textfelder sind jeweils für Bezüge B oder die Entwicklung E ausgeführt als Strukturen fester Länge:
- KS: Kurztitel (der Entwicklung), etwa 30 Zeichen
- KB: Kurzbeschreibung (der Entwicklung), etwa 300 Zeichen
- KL: Kurzlösung (der Entwicklung), etwa 30 Zeichen
- LD: Lösungsdefinition (der Lösung), etwa 150 Zeichen
- KA: Kurzaufgabe (der Entwicklung), etwa 30 Zeichen
- AD: Aufgabendefinition (der Aufgabe), etwa 150 Zeichen

Durch sukzessive Eingaben des Nutzers und der Vorschläge des Wissensmanagementsystems sowie darauf aufbauenden KI-Recherchen wird letztendlich die Entwicklung E beispielsweise mit drei Bezügen B gebildet über: UND B1 ODER B2 UND NICHT B3,
wobei B2 ein Quelldokument XXX besitzt

Der Nutzer trägt diese Entwicklung ergänzt um seine persönlichen Angaben NAME, ADRESSE sowie um KS, KB mit über persönlicher Verschlüsselung sichergestellter Veröffentlichungsschonfrist von 18 Monaten in die Datenstruktur ein. Das KI-System berechnet über mathematische Algorithmen eine hinreichende Erfindungshöhe und bestätigt die Neuheit, so dass eine Schutzrechtsanmeldung dem Nutzer empfohlen wird, welcher sich dem Vorschlag anschliesst. Daraufhin generiert der Rechner nachfolgende provisorische Schutzrechtsanmeldung und übersendet diese über eine Kommunikationsverbindung an eine Schutzrechtsannahmestelle, wobei zur Verdeutlichung die Textbausteine *KURSIV* eingefügt sind:
"Antrag auf Erteilung eines Patents
Anmelder und alleiniger Erfinder: *NAME*
Zustelladresse: *ADRESSE*
*kT*

### Gattung der Erfindung:

Die Erfindung bezeichnet ein *KT.*

### Stand der Technik:

Vorbekannt ist *KTB1* mit *KZB1,* welcher *KAB1* ist. Weiter vorbekannt ist *KTB2* mit *KLB2,* welcher *KAB2* aus der Druckschrift *XXX* vorbekannt ist. Weiter vorbekannt ist *KTB3* mit *KLB3*, welcher *KAB3.*

### Aufgabe:

Aufgabengemäss ist die *KTE KAE. KLE* gemäss des Schutzanspruchs löst diese Aufgabe.

### Lösung:

Dazu wird im wesentlichen ein *KTB1* mit *KLB1,* welcher *KABI ODER* ein *KTB2* mit *KLB2* welcher *KAB2 UND NICHT* ein *KTB3* mit *KLB3,* welcher *KAB3* ausgeführt als *KLE*, indem *DLE* bewirkt, dass dieser *DAE.*

### Vorteilhafte Ausführungsform:

Vorteilhaft wird die *KTE* ausgeführt als *KLB*1*,* indem *DLB1* bewirkt, dass dieser *DAB1, KBB1, ODER* die *KTE* wird ausgeführt indem *DLB2* bewirkt, dass dieser *DAB2, KBB2, UND NICHT* die *KTE* wird ausgeführt indem *DLB3* bewirkt, dass dieser *DAB3, KBB3.* Dadurch ist die *KTE KAE. KBE.*

### Anspruch:

*KTE,* welche als *KLB1 ODER* als *KLB2 UND NICHT* als *KLB3* ausgeführt ist, dadurch gekennzeichnet, dass diese als KLE ausgeführt ist.

### Kurzfassung:

Die Erfindung bezeichnet ein *KTE.* Aufgabengemäss ist die *KTE KAE. KBE*

### Erfinderbenennung:

Bezeichnung der Erfindung: *KTE*
Erfinder: *NAME; ADRESSE*
Das Recht auf das Schutzrecht ist auf den Anmelder übergegangen durch: Erfinder ist Anmelder"

Eine derartige provisorische Schutzrechtsanmeldung begründet einen Anmeldetag, dessen Priorität für eine den üblichen Gepflogenheiten entsprechende Nachanmeldung in Anspruch genommen werden kann. Die erfolgreich übenmittelte provisorische Schutzrechtsanmeldung wird dokumentenecht als Beleg ausgegeben, bspw. ausgedruckt.

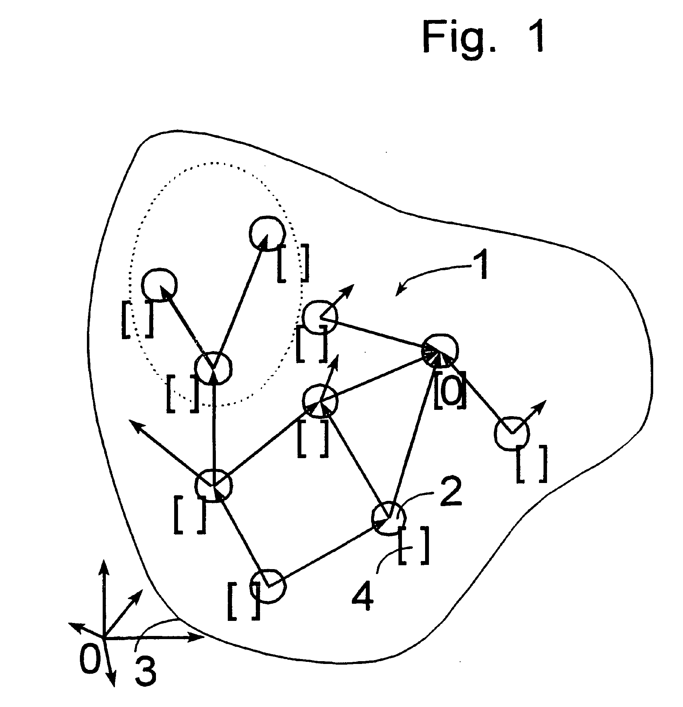

Die folgenden Figuren 1-6 versuchen, die Erfindung zu verdeutlichen, ohne dass diese dadurch beschränkt wird oder auf alle in der Beschreibung angegebenen wesentlichen Merkmale Bezug genommen werden kann und soll.

Nach Fig. 1 besteht ein neuronales Netz 1 zum computergestützten Wissensmanagement aus (üblicherweise als Neuronen bzw. Knoten bezeichneten) aufeinander bezogenen und gewichteten Elementen 2, welche durch ihre speziellen Eigenschaften einen Hilbertraum 3 ausbilden und denen vorzugsweise ein Koordinatenvektor 4 zugeordnet ist, welcher beim Wurzelelement vorteilhaft [0] gewählt wird.

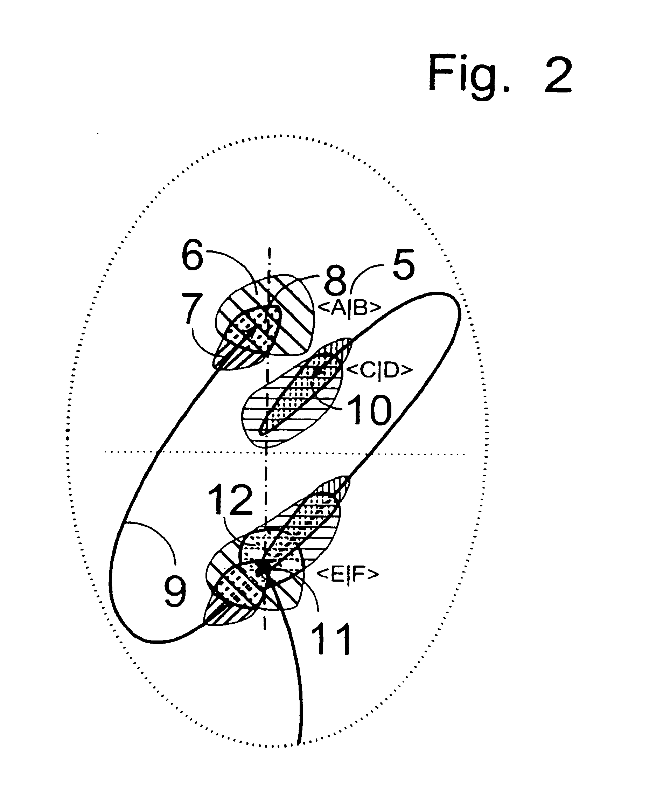

Nach Fig. 2 ist jedem einzelnen Element 2 der entsprechenden Einzelheit in Fig. 1 ein Bedeutungsinhalt zugeordnet, welcher als spezielle Form der Definition der Entwicklung als Wechselwirkungspaar 5 ausgebildet ist, und vorzugsweise eine Quantität 6 und eine Qualität 7 beschreibt, und damit über deren Teilmenge genau die Wissensmenge 8 definiert, welche die Quantität 6 auf die Qualität 7 und die Qualität 7 auf die Quantität 6 abbildet. Über gerichtete Bezüge 9 auf bereits eingetragene Bezugsentwicklungen werden diese dort definierten Wissensmengen 8, 10 miteinander verknüpft und begrenzen somit die beschriebene Wissensmenge 11 der sich darauf beziehenden Entwicklung. Eine Konkretisierung der Wissensmengen 8, 10 der Bezugsentwicklungen führt dadurch auch zu einer Konkretisierung der anfänglich nur durch die Bezugsgattung 12 begrenzten Wissensmenge 11 der sich darauf beziehenden Entwicklung selbst.

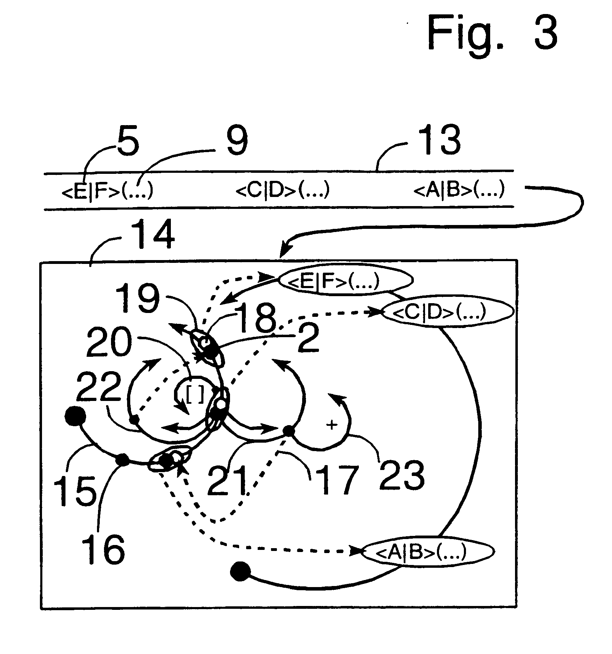

Nach Fig. 3 dient der zur Eingabe benutzte Stream 13 in Form eines Datenstroms, welcher streng chronologisch die Definition in Form eines Wechselwirkungspaares 5 und die Bezüge 9 auf bereits eingetragene Elemente 2 beinhaltet, zur inkrementellen Erweiterung des neuronalen Netzes, indem in die im linearen Speicherbereich 14 des Computers dynamisch über verkettete Listen 15 verwalteten assoziativen Datenstruktur neue Strukturelemente 16 eingefügt und über computerspezifische Zeiger 17 verknüpft werden. Vorteilhaft bilden ein Element 2 und ein NOT-Element 18 ein Paar 19, welches auf das Wechselwirkungspaar 5 zeigt und vorteilhaft eine Koordinatenliste 20 beinhaltet, welche die Koordinaten des Elements 2 beinhaltet, die invertiert den Koordinaten des NOT-Elements entsprechen. Jedem Element 2 und jedem NOT-Element 18 ist vorteilhaft eine Rückbezugsliste 21 und eine Vorwärzbezugsliste 22 zugeordnet, wobei den Bezugslisten 21, 22 vorteilhaft Bewertungslisten 23 zugeordnet sind.

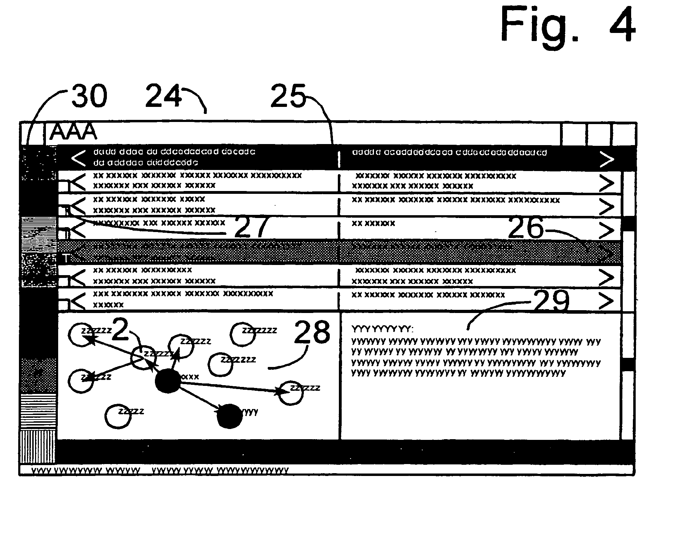

Nach Fig. 4 ermöglicht ein Dialogsystem über eine intuitive Oberfläche 24 die Eingabe von bzw. die Anfrage zu Entwicklungen über die Definition 25 des verbalen Wechselwirkungspaares und die Angabe von Bezügen. Dabei wird vorteilhaft quasisimultan vom neuronalen Netz eine Auswahl 26 von Elementen 2 bereits in der Wissensbasis erfasster Entwicklungen mit in den Definitionen 25 enthaltenen ähnlichen Begriffen angeboten, aus welcher einzelne Bezüge zu verwendeten Begriffen über einen Schalter 27 getätigt werden können. Innerhalb der angebotenen Auswahl 26 von Entwicklungen kann jeweils eine markiert werden, zu welcher die lokale Umgebung 28 der direkt verbundenen oder der naheliegenden Elemente 2 der assoziativen Datenstruktur angezeigt wird, vorteilhaft graphisch unter Darstellung des Abstands zwischen einzelnen Entwicklungen und deren Kurztiteln. In der lokalen Umgebung 28 kann über eine Untermarkierung zwischen den einzelnen Entwicklungen gewandert werden, wobei die Definition 25 und Kurzbeschreibung 29 dieser angezeigt wird. Nach vollständiger Definition 25 wird das Wechselwirkungspaar und die Bezüge signiert und über den Stream in die assoziative Datenstruktur des neuronalen Netzes integriert. In weiteren Tools 30 ermöglicht das Dialogsystem in ähnlicher oder üblicher Weise intuitiv die Eingabe oder Ausgabe eines Logins, eines Filters, einer textbasierten Suche, eine rekursive Eingabe von allgemeineren Entwicklungen zur Vorabdefinition von Begriffen, die Eingabe von zusätzlichen Bezügen und von Bewertungen, die Ausgabe der Strukturdaten der eingetragenen, direkt bezogenen Entwicklungen, insbesondere Koordinatenangaben des Elements zur Merkmalsanalyse der Entwicklung, Angabe deren zugeordnete Masse, bspw. mit Hilfe von Skalarprodukten berechnete "Erfindungshöhe" zu nächstliegenden (Kugel) oder nächstähnlichen (Raumwinkel) eingetragenen Entwicklungen, mit Hilfe der Norm ermittelter "Konkretisierungsgrad" und mit Hilfe der Zeitindizes von gleichen Termen aus Begriffen gleicher Bedeutung berechneter "Zeitrang" dieser. Bei den Analysen werden optional mehrere Entwicklungen (geeignet ausgewählt, gefiltert) berücksichtigt, wobei auch eine Analyse für einem zurückliegenden Zeitpunkt möglich ist, bei welcher alle Elemente jüngeren Zeitindizes unberücksichtigt bleiben und sich demzufolge die assoziative Datenstruktur in einer zurückliegenden Struktur darstellt.

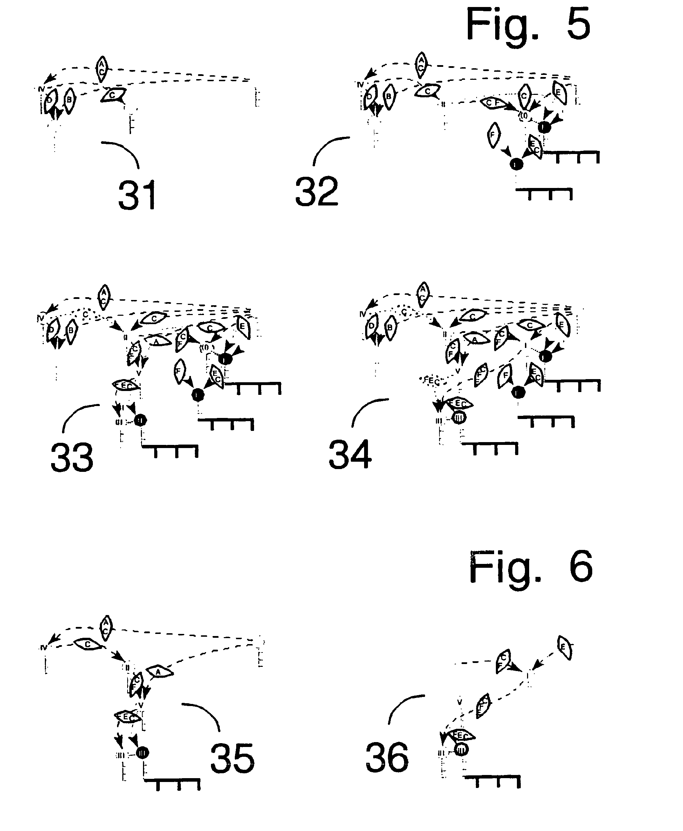

Nach Fig. 5 wird die dynamische Umstrukturierung beschrieben. Die assoziative Datenstruktur besteht aus Elementen (hier Dokumente und Urkunden), welche von älteren Dokumenten ausgehend über Bezüge von Merkmalen A. B, ... strukturiert und zur Initialisierung T0 (31) signifikant bewertet sind.
Zu T1 (32) wird zur Eintragung einer Urkunde I ein dazu notwendiger endgültigen Bezug C auf Dokument II und das zugeordnete nichtoffengelegte Dokument (I) eingetragen. Die Urkunde I' stellt eine abhängige Urkunde l' zur Urkunde I dar.
Zu T2 (33) ist bspw. nach der Prüfung einer später angemeldeten Urkunde lll, bezüglich des Dokuments II für ein äquivalentes Merkmal C ein älterer Bezug C als der des Bezugsdokuments IV signifikant, was eine Abwertung des alten Bezugs C und eine geänderte assoziative Datenstruktur ergibt.
Zu T3 (34) wird nach der Offenlegung des Dokument I erkennbar, dass alle Merkmale C;E;F vom Dokument III bereits vollständig durch das Dokument I vorweggenommen sind, und von einem Nutzer bspw. einem Prüfer, wird ein neuer signifikanter Bezug C, E, F zum Dokument 1 eingetragen. Somit wird die Urkunde III mit jüngeren endgültigen Bezug C, E, F zu Dokument V wegen fehlender Neuheit löschungsreif.

Fig. 6 beschreibt speziell Analysen im Patentwesen: Zur Ermittlung der "Erfindungshöhe" der Urkunde III werden zum Prioritätszeitpunkt (35) die Äste der einzelnen Merkmale rekursiv über ihre als Bezugselemente dienenden offengelegten Dokumente II, IV, V bewertet, wodurch über die sich damit ergebenden Koordinaten eine Berechnung möglich ist. Zur Ermittlung der "Neuheit" der Urkunde III wird zum aktuellen Zeitpunkt (36) in der assoziativen Datenstruktur bezüglich des zugeordneten Dokuments III der Zeitrang der Gesamtheit aller Merkmale der fixierten Bezüge C, E, F untersucht.

Mit der beispielhaften Entwicklung E und den beispielhaften Bezügen B1 bis B3 und deren ebenfalls beispielhaften Textfeldern:
KTE: *Antirostschraube*
KBE: *Eine übliche Stahlschraube bildet keinen Rost, wenn ihre Oberfläche mit einem galvanisch aufgebrachten Überzug aus Nickel versehen ist.*
KLE: *Nickelschraube*
DLE: *galvanisch aufgebrachter Überzug aus Nickel auf eine Gewindeschraube*
KAE: *nichtrostend*
DAE: *bildet keinen Rost*

KTBI: *Schraube*
KBBI: *Eine Schraube weist einen drehformschlüssigen Gewindestift auf*
KLBI: *Gewindestift*
DLBI: *Stift mit Aussengewinde*
KABI: *drehformschlüssig*
**DAB1**: *Schraubbewegung ist alleiniger Freiheitsgrad*

**KTB2**: *Schraube*
**KBB2:** *Eine Schraube ist mit ihrem Spiralzylinder in ein Innengewinde eindrehbar*
**KLB2:** *Spiralzylinder*
**DLB2:** *Zylindermantel ist spiralartig ausgeformt*
**KAB2**: *eindrehbar*
**DAB2**: *Möglichkeit einer Drehung mit axialer Translation*
als Quelldokument ist XXX eingetragen
**KTB3:** *Antriebsschraube*
**KBB3:** *Eine Antriebsschraube erzeugt als Propeller mit seiner Drehung eine Bewegung fluider Medien.*
**KLB3:** *Propeller*
**DLB3:** *schraubenförmiges Antriebsmittel für fluide Medien*
**KAB3:** *erzeugt Strömung*
**DAB3:** *Drehung erzeugt Bewegung eines Fluids*
wird als Ausführungsbeispiel rechnergestützt folgende provisorische Schutzrechtsanmeldung generiert und beim Patentamt per FAX eingereicht:
"Antrag auf Erteilung eines Patents
Anmelder und alleiniger Erfinder: *Steiner, Ralf*
Zustelladresse: *Balanstrasse 389: 81549 München; Deutschland*

### Antirostschraube

### Gattung der Erfindung:

Die Erfindung bezeichnet ein *Antirostschraube.*

### Stand der Technik:

Vorbekannt ist *Schraube* mit *Gewindestift,* welcher *drehformschlüssig* ist. Weiter vorbekannt ist *Schraube* mit *Spiralzylinder,* welcher *eindrehbar* aus der Druckschrift *XXX* vorbekannt ist. Weiter vorbekannt ist *Antriebsschraube* mit *Propeller,* welcher *erzeugt Strömung.*

### Aufgabe:

Aufgabengemäss ist die *Antirostschraube nichtrostend. Nickeischraube* gemäss des Schutzanspruchs löst diese Aufgabe.

### Lösung:

Dazu wird im wesentlichen ein *Schraube* mit *Gewindestift,* welcher *drehformschlüssig ODER* ein *Schraube* mit *Spiralzylinder* welcher *eindrehbar UND NICHT ein Antriebsschraube* mit *Propeller,* welcher *erzeugt Strömung* ausgeführt als *Nickelschraube,* indem *galvanisch aufgebrachter Überzug aus Nickel auf eine Gewindeschraube* bewirkt dass dieser *bildet keinen Rost.*

### Vorteilhafte Ausführungsform:

Vorteilhaft wird die *Antirostschraube* ausgeführt als *Schraube,* indem *Stift mit Aussengewinde* bewirkt, dass dieser *Schraubbewegung ist alleiniger Freiheitsgrad. Eine Schraube weist einen drehformschlüssigen Gewindestift auf. ODER* die *Antirostschraube* wird ausgeführt indem *Zylindermantel ist spiralartig ausgeformt* bewirkt, dass dieser *Möglichkeit einer Drehung mit axialer Translation. Eine Schraube ist mit ihrem Spiralzylinder in ein Innengewinde eindrehbar. UND NICHT* die *Antirostschraube* wird ausgeführt indem *schraubenförmiges Antriebsmittel für fluide Medien* bewirkt, dass dieser *Drehung erzeugt Bewegung eines Fluids. Eine Antriebsschraube erzeugt als Propeller mit seiner Drehung eine Bewegung fluider Medien.* Dadurch ist die *Antirostschraube nichtrostend Eine übliche Stahlschraube bildet keinen Rost, wenn ihre Oberfläche mit einem galvanisch aufgebrachten Überzug aus Nickel versehen ist.*

### Anspruch:

*1. Antirostschraube,* welche als *Schraube oder* als *Schraube und nicht* als *Antriebsschraube* ausgeführt ist, dadurch gekennzeichnet, da diese als *Nickelschraube* ausgeführt ist.

### Kurzfassung:

Die Erfindung bezeichnet ein *Antirostschraube.* Aufgabengemäss ist die *Antirostschraube nichtrostend Eine übliche Stahlschraube bildet keinen Rost, wenn ihre Oberfläche mit einem galvanisch aufgebrachten Überzug aus Nickel versehen ist.*

### Erfinderbenennung:

Bezeichnung der Erfindeng: *Antirostschraube*
Erfinder: *Steiner, Ralf, Balanstrasse 389: 81549 München: Deutschland*
Das Recht auf das Schutzrecht ist auf den Anmelder übergegangen durch: Erfinder ist Anmelder"

### Bezugszeichen:

1 neuronales Netz
2 Elemente
3 Hilbertraum
4 Koordinatenvektor
5 Wechselwirkungspaar
6 Quantität
7 Qualität
8 Wissensmenge einer Bezugsentwicklung
9 Bezug
10 Wissensmenge einer weiteren Bezugsentwicklung
11 Wissensmenge der Entwicklung
12 Bezugsgattung
13 Stream
14 Speicherbereich
15 verkettete Liste
16 Strukturelement
17 computerspezifische Zeiger
18 NOT-Element
19 Paar
20 Koordinatenliste
21 Rückbezugsliste
22 Vorwärzbezugsliste
23 Bewertungsliste
24 intuitive Oberfläche
25 Definition
26 Auswahl
27 Schalter
28 Umgebung
29 Kurzbeschreibung
30 Tool
31 Zeitpunkt T0
32 Zeitpunkt T1
33 Zeitpunkt T2
34 Zeitpunkt T3
35 Prioritätszeitpunkt
36 aktueller Zeitpunkt

## Patentansprüche

1. Neuronales Netz zum computergestützten Wissensmanagement, wobei das neuronale Netz (1) aus aufeinander bezogenen und gewichteten Elementen (2) besteht, welches rechentechnisch als assoziative Datenstruktur dynamisch im Speicherbereich (14) eines Computers angelegt ist, und den einzelnen Elementen (2) ein Bedeutungsinhalt zugeordnet ist, **dadurch gekennzeichnet,**
- **dass** jedem Element (2) als Bedeutungsinhalt eine Definition (25) einer technischen Entwicklung zugeordnet oder diese direkt beinhaltet ist,
- **dass** diese Definition (25) eine Teilmenge in Form eines Wechselwirkungspaares (5) ausbildet, welches optional in der Form < Quantität (6) | Qualität (7) > über seine verbale Definition (25) die technische Entwicklung und damit genau die Wissensmenge (11) definiert, welche die Quantität (6) auf die Qualität (7) und die Qualität (7) auf die Quantität (6) abbildet und
- **dass** die Elemente (2) einen Hilbertraum (3) ausbilden.

2. Neuronales Netz zum computergestützten Wissensmanagement nach einem der vorhergehenden Ansprüche, **dadurch gekennzeichnet,**
- **dass** ein Operator zur Berechnung eines Skalarprodukts zwischen je zwei Elementen (2) implementiert ist, welcher optional die Form des euklidischen für den n-dimensionalen Raum aufweist,
- **dass** vom neuronalen Netzes (1) zu jedem Element (2) ein zugeordnetes NOT-Element (18) mit negativem Gewicht des Elements (2) generierbar ist, welches genau die von der Wissensmenge (11) des zugeordneten Elements (2) ausgeschlossene Wissensmenge bezeichnet, und optional mit dem Element (2) als Paar (19) generiert ist,
- **dass** im neuronalen Netz (1) ein Neueintrag eines Elements (2) als eine Addition und eine Bewertung eines Bezugs (9) als eine Multiplikation im Hilbertraum (3) implementiert ist und
- **dass** vom neuronalen Netz (1) für jedes Element (2) ein Mass berechenbar und optional mit diesem gespeichert ist.

3. Neuronales Netz zum computergestützten Wissensmanagement nach einem der vorhergehenden Ansprüche, **dadurch gekennzeichnet,**
- **dass** dem Element (2) genau ein Koordinatenvektor (4) zugeordnet ist oder diesen direkt beinhaltet, welcher optional über Rekursionen im neuronalen Netz (1) berechnet wird,
- **dass** optional der Koordinatenvektor (4) als dynamisch verkettete Liste (15) ausgebildet ist und optional nur die notwendigen Koordinaten mit und nach ihrem Zeitindex geordnet beinhaltet,
- **dass** optional jedes Element (2) beim Eintrag einen eindeutigen Zeitindex und einen eindeutigen Nutzerindex beinhaltet,
- **dass** optional eine Verschlüsselung, Identifizierung des berechtigten Nutzers und Authentifizierung der Eingaben über implementierte kryptologische Verfahren sichergestellt ist, wobei optional mit Hilfe des Zeitindex und des Nutzerindex die Authentizität der Definition und der Bezüge (9) gewährleistet und diese optional verschlüsselt sind,
- **dass** optional über einen temporären Datenbereich der verschiedenartigen Listenelemente der Berechnungszeitindex ihrer letzten Berechnung zugeordnet ist, wobei dieser Berechnungszeitindex optional vor Ausführung der Berechnung mit dem aktuellen Berechnungszeitindex verglichen wird und
- **dass** optional jedes Element (2) einen Verweis auf den zugeordneten Eintrag einer Inhaltsdatenbank aufweist, welcher als Grundlage zur Generierung des Wissens diente.

4. Neuronales Netz zum computergestützten Wissensmanagement nach einem der vorhergehenden Ansprüche, **dadurch gekennzeichnet,**
- **dass** das neuronale Netz (1) Bestandteil eines Servers ist,
- **dass** es optional über das Internet und optional über Einbindung eines sicheren e-Commerce Systems über ein Dialogsystem mit einem Nutzer verbunden ist,
- **dass** optional die Eingabe für das neuronale Netz (1) über einen chronologischen Stream (13) erfolgt,
- **dass** optional separate dezentrale neuronale Netze (1') mit dem zentralen neuronalen Netz (1) über eine Kommunikationsverbindung verbunden und optional halbseitig gespiegelt sind und
- **dass** optional das Dialogsystem eine intuitive Oberfläche (24) aufweist, welche als Eingabe für das neuronale Netz (1) eine Definition (25) des Wechselwirkungspaares (5), aus einer Auswahl (26) über Schalter (27) selektierte Bezüge (9) und optional einen Kurztitel und eine Kurzbeschreibung (29) sowie als Ausgabe die graphische Anzeige einer lokalen Umgebung (28) von direkt verbundenen und/oder unverbundenen Elementen (2) in der assoziativen Datenstruktur gestattet sowie weitere Tools (30) aufweist.

5. Neuronales Netz zum computergestützten Wissensmanagement nach einem der vorhergehenden Ansprüche, **dadurch gekennzeichnet,**
- **dass** dem neuronalen Netz (1) speziell angepasste Systeme für Anwendungen im Patentwesen. Makroökonomie, Marktanalyse oder Genanalyse zugeordnet sind,
- **dass** speziell für eine Anwendung im Patentwesen optional über einen entsprechenden Zeitfilter bei der Ausgabe eine Offenlegungsschonfrist realisiert ist, optional das Wissen eines Schutzrechts als Kopie mit unveränderbaren abschliessenden Bezügen (9), Definitionen (25) und mit einem besonderen Flag **gekennzeichnet** ist, optional bezüglich eines derartigen Schutzrechtswissens zu einem gegebenen Zeitindex gegenüber der assoziativen Datenstruktur eine rechentechnisch definierte sachliche Neuheit bezüglich der Gesamtheit der signifikanten Bezüge (9) sowie eine rechentechnisch definierte sachliche Erfindungshöhe über Masse berechenbar ist, und optional ein Verweis auf das zugeordnete amtliche Register mit dem Rechtsstand beinhaltet ist.

6. Neuronales Netz zum computergestützten Wissensmanagement nach einem der vorhergehenden Ansprüche, **dadurch gekennzeichnet,**
- **dass** den einzelnen Elementen jeweils ein ergänzendes verbales Textfeld zugeordnet ist, welches den Bedeutungsinhalt der Wissensmenge obiger Definition kurz erläutert oder schlagwortartig verkürzt darstellt, wobei optional den einzelnen Elementen sowohl erläuternde als auch verkürzende Textfelder in Form von Kurztitel und Kurzbeschreibung zugeordnet sind,
- **dass** optional jedes Teil des Wechselwirkungspaares in eine Kurzfassung und eine Definition unterteilt ist und diesen ein Textfeld zugeordnet ist.

7. Neuronales Netz zum computergestützten Wissensmanagement nach einem der vorhergehenden Ansprüche, **dadurch gekennzeichnet,**
- **dass** dem neuronalen Netz Mittel zur Telekopie und/oder Fernübertragung von Textdaten zugeordnet sind und
- **dass** optional Mittel zur Unterstützung elektronischer Unterschriften vorhanden sind.

8. Verfahren für ein neuronales Netz zum computergestützten Wissensmanagement, **dadurch gekennzeichnet, dass**
- in einem Schritt eine erweiternde Eingabe an das neuronale Netz (1) erfolgt, welche optional zuvor in einen Stream (13) konvertiert wurde,
- in einem weiteren Schritt durch Zugriff auf einen linearen Speicherbereich (14) des Computers, die Verwendung und Arithmetik von computerspezifischen Zeigern (17) auf Teile dieses Speicherbereichs (14) und einen für Rekursionen über die gesamte assoziative Datenstruktur ausreichend grossen Stack eine Verknüpfung und inkrementelle Erweiterung der assoziativen Datenstruktur des neuronalen Netzes (1) um diese Eingabe erfolgt,
- in einem weiteren Schritt das Gewicht der Elemente (2) aktualisiert bzw. berechnet wird, wobei der Neueintrag eines Elements (2) einer Addition und die Bewertung eines Bezugs (9) einer Multiplikation unter Verwendung der implementierten Operatoren zur Berechnung der Metrik, Norm und Skalarprodukt im Hilbertraum entspricht, welche vorzugsweise als euklidische für den n-dimensionalen Raum ausgebildet sind,
- in einer optionalen Vielzahl der vorhergehenden Schritte statistisch eine Konvergenz der assoziativen Datenstruktur des neuronalen Netzes (1) zu geringer Redundanz erfolgt,
- in einem weiteren Schritt unter Verwendung der Operatoren zur Berechnung der Metrik, Norm und Skalarprodukt im Hilbertraum über die Berechnung von Massen vom neuronalen Netz (1) eine Verwaltung von und/oder Analyse zwischen einzelnen Elementen (2) vorgenommen wird,
- in einem letzten Schritt die Ergebnisse der Verwaltung oder Analyse ausgegeben werden.

9. Verfahren für ein neuronales Netz zum computergestützten Wissensmanagement nach einem der vorhergehenden Verfahrensansprüche, **dadurch gekennzeichnet,**
- **dass** alle Elemente (2) dynamisch gespeichert und über eine über Zeiger (17) verkettete Liste (15) dynamisch verwaltet werden,
- **dass** jedes Element (2) ein eindeutig zugeordnetes NOT-Element (18) besitzt, welches optional einen Zeiger (17) auf dasselbe Wechselwirkungspaar (5) aufweist und optional mit der Generierung des Elements (2) generiert wird, wobei sich optional das NOT-Element (18) im LSB des Zeitindex vom zugeordneten Element (2) unterscheidet,
- **dass** optional die Generierung der Bezüge (9) selbst über eine Intervallschachtelung zur Ermittlung des dem Zeitindex in der konkreten assoziativen Datenstruktur zugeordneten Speicherbereiches (14) des Bezugselements erfolgt und
- **dass** diese optional über Zeiger (17) ein- oder wechselseitig verkettet werden, wobei diese optional über dynamische Bezugslisten (21, 22) verwaltet werden,
- **dass** die Bezüge (9) selbst optional mit dynamisch gespeicherten, optional nutzerspezifischen, Bewertungen versehen werden, welche optional über das LSB des eindeutigen Nutzerindex ausgebildet sind und welche optional über dynamisch verkettete Bewertungslisten (23) verwaltet werden,
- **dass** die Operatoren zur Berechnung der Metrik, Norm und Skalarprodukt im Hilbertraum vom neuronalen Netz (1) auf rekursiv ermittelte Koordinaten und/oder auf Koordinatenvektoren (4) der Elemente (2) angewandt werden und optional die Analysen auf Methoden der Vektorrechnung beruhen und
- **dass** optional vom neuronalen Netz (1) aus den am meisten signifikanten Bezügen (9) der assoziativen Datenstruktur und den zugeordneten Elementen (2) ein Klassifizierungssystem generiert wird.

10. Verfahren für ein neuronales Netz zum computergestützten Wissensmanagement nach einem der vorhergehenden Verfahrensansprüche, **dadurch gekennzeichnet,**
- **dass** über die intuitive Oberfläche (24) bereits während der Eingabe der Definition (25) des Wechselwirkungspaares (5) vom neuronalen Netz (1) eine Auswahl (26) von Elementen (2) ausgegeben wird, welche ähnliche Begriffe wie in der Definition (25) beinhalten, wobei optional ein durch den Nutzer geschalteter Bezug (9) auf ein Element (2) vom neuronalen Netz (1) als trainierende Eingabe benutzt wird,
- **dass** optional neue, die beschriebene Wissensmenge (11) definierende Quantitäten (6) bzw. Qualitäten (7) auf der Basis der durch angegebene Bezüge (9) vorbekannten Quantitäten (6) bzw. Qualitäten (7) durch den Nutzer begrifflich festgelegt werden, wobei optional Operatoren AND, OR, NOT verwendet werden, diese optional vom neuronalen Netz (I) über eine Analyse der Syntax und Semantik in mathematisch logische.Terme von Begriffen transformiert und rekursiv über die Bezugselemente rechentechnisch aufgelöst werden, wobei optional daraus vom neuronalen Netz (I) je ein Thesaurus für Quantitäten (6) bzw. Qualitäten (7) generiert wird, welcher diese Begriffe hierarchisch strukturiert und entsprechend des Gewichts der sie verwendenden Elemente (2) bewertet beinhaltet,
- **dass** optional jedem Element (2) durch den Nutzer eine konkrete in der beschriebenen Wissensmenge (11) beinhaltete technische Entwicklung als Kurzbeschreibung (29) und ein Kurztitel beigefügt wird, wobei optional in den Kurzbeschreibungen (29) und Definitionen (25) in üblicher Weise textorientiert und/oder über linguistisch sinnvolle Verknüpfungen im Kontext nach Begriffen recherchiert werden kann, wobei optional dazu vom neuronalen Netz (1) je eine rechts- und linkgeordnete indizierte Liste der Begriffe mit Verweis auf den Zeitindex des diesen beinhaltenden Elements (2) oder ein Zeiger (17) auf diesen generiert wird und
- **dass** optional der zur Eingabe dienende Stream (13) im Preprozessing automatisch aus textbasierten Inhalten von Inhaltsdatenbanken generiert wird, indem eine computergestützte automatische verdichtende Projektion aus dem Kontext des Inhalts in das Format des Streams (13) erfolgt, wobei optional beim Preprozessing automatisch die Recherchenmöglichkeiten und der Thesaurus über der Wissensbasis des neuronalen Netzes (1) verwendet werden.

11. Verfahren für ein neuronales Netz zum computergestützten Wissensmanagement nach einem der vorhergehenden Verfahrensansprüche, wobei die Innovation als spezielle technische Entwicklung über ein rechnergestütztes Wissensmanagementsystem über verbale Definitionen und Bezüge zu anderen vorbekannten technischen Entwicklungen dargestellt wird, **dadurch gekennzeichnet, dass**
- in einem optionalen ersten Verfahrensschritt über die vom Wissensmanagementsystem berechnete und dem Nutzer ausgegebene Neuheit und Erfindungshöhe die Innovation bezüglich hohen Innovationspotentials vom Nutzer sukzessive fokussiert wird,
- in einem weiteren Verfahrensschritt vom Nutzer die Angaben zur Identität und Adresse des Nutzers sowie sämtliche Textfelder eingegeben werden,
- in einem weiteren Verfahrensschritt die Entwicklung als Innovation in das Wissensmanagementsystem eingetragen wird, wobei diese optional über eine Veröffentlichungsschonfrist nutzerspezifisch sicher verschlüsselt unzugänglich ist,
- in einem optionalen weiteren Verfahrensschritt rechnergestützt unter Verwendung von Standardfloskeln eine provisorische Schutzrechtsanmeldung generiert wird und
- in einem optionalen letzten Verfahrensschritt diese unverzüglich.an eine Schutzrechtsannahmestelle übertragen wird, wobei optional diese Anmeldung mit einer elektronischen Unterschrift signiert wird.

12. Verwendung des neuronalen Netzes zum computergestützten Wissensmanagement nach einem der vorstehenden Ansprüche, **dadurch gekennzeichnet,**
- **dass** es im Patentwesen als Expertensystem für sachliche Entscheidungen, zur Verwaltung oder für Analysen dient, wobei das Wechselwirkungspaar (5) zwischen Lösungen und Aufgaben bzw. Mittel und Wirkungen im technischen Gebiet ausgebildet ist, oder
- **dass** es in der Makroökonomie als Expertensystem für wirtschaftliche Entscheidungen, zur Verwaltung oder für Analysen dient, wobei das Wechselwirkungspaar (5) zwischen wirtschaftlich trennbaren Einzelwirtschaften und Tätigkeitsfeldern ausgebildet ist, oder
- **dass** es im Marketing als Expertensystem für Vertriebsentscheidungen, zur Verwaltung oder für Analysen dient, wobei das Wechselwirkungspaar (5) zwischen Produkten und Kundenbedürfnissen ausgebildet ist, oder
- **dass** es in der Gentechnik als Expertensystem für die DNS-Sequenzierung, zur Verwaltung oder für Analysen dient, wobei das Wechselwirkungspaar (5) zwischen Gensequenzen und Biofunktionen aus gebildet ist, oder
- **dass** es in der Innovationsförderung zur Schutzrechtsanmeldung von innovativen technischen Entwicklungen bei Schutzrechtsannahmestellen ausgebildet ist.

## Claims

1. Neural network for computer-aided knowledge management, with the neural network (1) being composed of elements (2) which are related to one another and are weighted, and which network is stored computationally as an associative data structure dynamically in the memory area (14) of a computer, and the individual elements (2) are allocated a significance content,
**characterized**
- **in that** each element (2) is allocated a definition (25) of a technical development as the significance content, or directly contains this,
- **in that** this definition (25) forms a subset in the form of an interaction pair (5) which, optionally in the form < quantity (6) quality (7) >, via its verbal definition (25) defines the technical development and hence accurately defines the knowledge set (11), which maps the quantity (6) onto the quality (7), and the quality (7) onto the quantity (6), and
- **in that** the elements (2) form a Hilbert space (3).

2. Neural network for computer-aided knowledge management as claimed in one of the preceding claims, **characterized**
- **in that** an operator is implemented for calculating a scalar product between each of the two elements (2), and is optionally in the form of the Euclidean for the n-dimensional space,
- **in that** an associated NOT element (18) with a negative weighting for the element (2) can be generated by the neural network (1) for each element (2), which NOT element (18) accurately denotes the knowledge set excluded from the knowledge set (11) of the associated element (2), and is optionally generated as a pair (19) with the element (2),
- **in that** a new entry of an element (2) is implemented in the neural network (1) as an addition, and a weighting of a reference (9) is implemented as a multiplication in Hilbert space (3), and
- **in that** a mass can be calculated for each element (2) by the neural network (1), and is optionally stored with it.

3. Neural network for computer-aided knowledge management as claimed in one of the preceding claims, **characterized**
- **in that** the element (2) has one, and only one, associated coordinate vector (4), or directly contains this vector, which is optionally calculated via recursions in the neural network (1),
- **in that** the coordinate vector (4) is optionally in the form of a dynamically concatenated list (15) and optionally includes only the necessary coordinates organized with and on the basis of their time index,
- **in that**, when entered, each element (2) optionally includes a unique time index and a unique user index,
- **in that** encryption, identification of the authorized user and authentication of the inputs are optionally ensured by implementing cryptological methods, with the authenticity of the definition and of the references (9) optionally being ensured by means of the time index and the user index, and the definition and the references (9) optionally being encrypted,
- **in that** the various types of list elements are optionally associated with the calculation time index of their last calculation via a temporary data area, with this calculation time index optionally being compared with the current calculation time index before carrying out the calculation, and
- **in that** each element (2) optionally has a cross-reference to the associated entry in a content database, which is used as the basis for generating the knowledge.

4. Neural network for computer-aided knowledge management as claimed in one of the preceding claims, **characterized**
- **in that** the neural network (1) is a component of a server,
- **in that** it is connected to a user via a dialog system, optionally via the Internet and optionally with the inclusion of a secure e-commerce system,
- **in that** inputs for the neural network (1) are optionally entered via a chronological stream (13),
- **in that** separate decentralized neural networks (1') are optionally connected to the central neural network (1) via a communication link and are optionally half-mirrored, and
- **in that** the dialog system optionally has an intuitive interface (24) which, as an input for the neural network (1), allows a definition (25) of the interaction pair (5), from a selection (26) of references (9) selected via switches (27), and optionally allows a short title and a short description (29) and, as an output, allows the graphical display of a local environment (28) of directly connected and/or unconnected elements (2) in the associative data structure, and has further tools (30).

5. Neural network for computer-aided knowledge management as claimed in one of the preceding claims, **characterized**
- **in that** the neural network (1) has specifically matched associated systems for applications in patent matters, macroeconomy, market analysis or gene analysis,
- **in that**, specifically for use in patent matters, a laid-open period of grace is optionally provided for the output via an appropriate time filter, the knowledge of a protective right is optionally identified as a copy with final references (9) which cannot be varied, with definitions (25) and with a particular flag, a computationally defined substantial novelty with regard to the totality of the significant references (9) and a computationally defined substantial inventive step in comparison to the mass of data can optionally be calculated with respect to such protective rights knowledge, relating to a given time index, in comparison with the associative data structure, and a cross-reference is optionally included to the associated official register with the legal situation.

6. Neural network for computer-aided knowledge management as claimed in one of the preceding claims, **characterized**
- **in that** each of the individual elements has an associated supplementary verbal text field which briefly explains the significance content of the knowledge set for the above definition, or represented in abbreviated key word form, with the individual elements optionally having both explanatory and abbreviating associated text fields in the form of a short title and short description, and
- **in that** each part of the interaction pair is optionally subdivided into a short version and a definition and has an associated text field.

7. Neural network for computer-aided knowledge management as claimed in one of the preceding claims, **characterized**
- **in that** the neural network has associated means for tele-copying and/or for long-distance transmission of text data, and
- **in that** means are optionally provided for supporting electronic signatures.

8. Method for a neural network for computer-aided knowledge management, **characterized in that**
- an expanded input to the neural network (1) is entered in one step, having optionally been converted in advance to a stream (13),
- linking and incremental expansion of the associative data structure of the neural network (1) relating to this input being carried out in a further step by access to a linear memory area (14) of the computer, the use and arithmetic of computer-specific pointers (17) to parts of this memory area (14) and a stack which is sufficiently large for recursions over the entire associative data structure,
- the weight of the elements (2) being updated and/or calculated in a further step, with the new entry of an element (2) corresponding to an addition and the weighting of a reference (9) corresponding to a multiplication using the implemented operators for calculating the metrics, norm and scalar product in Hilbert space which are preferably in the form of the Euclidean for the n-dimensional space,
- convergence of the associative data structure of the neural network (1) for low redundancy is carried out statistically in an optionally large number of the preceding steps,
- administration of and/or analysis between individual elements (2) is carried out in a further step, using the operators for calculating the metrics, norm and scalar product in Hilbert space, via the calculation of masses by the neural network (1), and
- the results of the administration or analysis are output in a final step.

9. Method for a neural network for computer-aided knowledge management as claimed in one of the preceding method claims,
**characterized**
- **in that** all the elements (2) are stored dynamically, and are administered dynamically via a list (15) concatenated via pointers (17),
- **in that** each element (2) has a uniquely associated NOT element (18), which optionally has a pointer (17) to the same interaction pair (5) and is optionally generated with the generation of the element (2), with the NOT element (18) optionally differing from the associated element (2) in the LSB of the time index,
- **in that** the generation of the references (9) themselves is optionally carried out via interval interleaving to determine that memory area (14) of the reference element which is associated with the time index in the specific associative data structure, and
- **in that** this is optionally concatenated at one end or alternately via pointers (17), which are optionally administered via dynamic reference lists (21, 22),
- **in that** the references (9) are themselves optionally provided with dynamically stored, optionally user-specific weightings, which are optionally formed via the LSB of the unique user index and which are optionally administered via dynamically concatenated weighting lists (23),
- **in that** the operators for calculating the metrics, norm and scalar product in Hilbert space from the neural network (1) are applied to recursively determined coordinates and/or to coordinate vectors (4) of the elements (2), and the analyses are optionally based on vector calculation methods, and
- **in that** a classification system is optionally generated by the neural network (1) from the most significant references (9) of the associative data structure and from the associated elements (2) .

10. The method for a neural network for computer-aided knowledge management as claimed in one of the preceding method claims, **characterized**
- **in that**, even while the definition (25) of the interaction pair (5) is being entered, a selection (26) of elements (2) is output from the neural network (1) via the intuitive interface (24), which elements (2) contain similar terms to those in the definition (25), with a reference (9) (which is connected by the user) to an element (2) optionally being used as a training input by the neural network (1),
- **in that** new quantities (6), which define the described knowledge set (11), or qualities (7) are optionally defined (in terms of the terminology) by the user on the basis of the quantities (6) and qualities (7), respectively, which are already known by means of stated references (9), with AND, OR, NOT operators optionally being used, which are optionally transformed by the neural network (1), by means of analysis of the syntax and semantics, to mathematically logical terms of terminology and being solved recursively by computation via the reference elements, with the neural network (1) in each case optionally using this to generate a respective Thesaurus for quantities (6) and qualities (7), which contains these terms on a hierarchically structured basis and weighted in accordance with the weight of the elements (2) which use them,
- **in that** the user optionally adds to each element (2) a specific technical development, which is contained in the described knowledge set (11), as a brief description (29) and a brief title, in which case the brief descriptions (29) and definitions (25) can optionally be searched for terms in the normal manner on a text-oriented basis and/or via linguistically worthwhile links in the context, with the neural network (1) optionally for this purpose generating in each case one right-ordered and left-ordered indexed list of the terms with a cross-reference to the time index of the element (2) containing it, or a pointer (17) to it being generated, and
- **in that** the stream (13) which is used for the input is optionally generated automatically during preprocessing from text-based contents of content databases, in that a computer-aided, automatic, compressed projection from the context of the content is produced into the format of the stream (13), with the search options and the Thesaurus for the knowledge base of the neural network (1) optionally being used automatically during the preprocessing.

11. The method for a neural network for computer-aided knowledge management as claimed in one of the preceding method claims, with the innovation being represented as a specific technical development relating to a computer-aided knowledge management system via verbal definitions and references to other already known developments,
**characterized in that**
- the innovation is focused successively by the user, with regard to high innovation potential, in an optional first method step relating to the novelty and inventive step calculated by the knowledge management system and output to the user,
- in a further method step, the user enters the details of the identity and address of the user and all the text fields,
- in a further method step, the development is entered into the knowledge management system as an innovation, with this development optionally not being accessible during a publication period of grace by being securely encrypted on a user-specific basis,
- in an optional further method step, a provisional protective rights application is generated with computer assistance using standard phrases, and
- in an optional final method step, these are transferred without delay to a protective rights receiving point, with this application optionally being signed with an electronic signature.

12. Use of the neural network for computer-aided knowledge management as claimed in one of the preceding claims, **characterized**
- **in that**, for patent matters, it is used as an expert system for substantial decisions, for administration or for analyses, with the interaction pair (5) being formed between solutions and tasks or means and effects in the technical field, or
- **in that** it is used in the macroeconomy as an expert system for financial decisions, for administration or for analyses, with the interaction pair (5) being formed between individual economies which can be separated economically and activity fields, or
- **in that** it is used in marketing as an expert system for marketing decisions, for administration or for analyses, with the interaction pair (5) being formed between products and customer requirements, or
- **in that** it is used in gene technology as an expert system for DNA sequencing, for administration or for analyses, with the interaction pair (5) being formed between gene sequences and biofunctions, or
- **in that** it is formed in the promotion of innovations for protective rights application of innovative technical developments at protective rights receiving points.

## Revendications

1. Réseau neuronal pour la gestion de connaissances assistée par ordinateur, le réseau neuronal (1) se composant d'éléments (2) rapportés et pondérés les uns par rapport aux autres, lequel est créé mathématiquement de manière dynamique sous la forme d'une structure de données associative dans la zone de mémoire (14) d'un ordinateur, et un contenu significatif étant associé aux éléments individuels (2), **caractérisé en ce**
- **qu'**à chaque élément (2) en tant que contenu significatif est associée une définition (25) d'un développement technique ou celle-ci y est contenue directement,
- **que** cette définition (25) forme une quantité partielle sous la forme d'une paire interactive (5), laquelle définit en option sous la forme < quantité (6) |qualité (7) > le développement technique par le biais de sa définition verbale (25) et ainsi exactement la quantité de connaissances (11) qui représente la quantité (6) sur la qualité (7) et la qualité (7) sur la quantité (6) et
- **que** les éléments (2) forment un espace de Hilbert (3).

2. Réseau neuronal pour la gestion de connaissances assistée par ordinateur selon l'une des revendications précédentes, **caractérisé en ce**
- **qu'**un opérateur pour calculer un produit scalaire à chaque fois entre deux éléments (2) est mis en oeuvre, lequel présente en option la forme euclidienne pour l'espace à n dimensions,
- **qu'**un élément NOT (18) associé ayant un poids négatif de l'élément (2) peut être généré par le réseau neuronal (1) pour chaque élément (2), lequel désigne exactement la quantité de connaissance exclue de la quantité de connaissance (11) de l'élément associé (2) et, en option, est généré avec l'élément (2) en tant que paire (19),
- **qu'**un nouvel enregistrement d'un élément (2) sous la forme d'une addition et une évaluation d'une référence (9) sous la forme d'une multiplication dans l'espace de Hilbert (3) est mis en oeuvre dans le réseau neuronal (1) et
- **qu'**une valeur peut être calculée par le réseau neuronal (1) pour chaque élément (2) et, en option, est enregistrée avec celui-ci.

3. Réseau neuronal pour la gestion de connaissances assistée par ordinateur selon l'une des revendications précédentes, **caractérisé en ce**
- **qu'**exactement un vecteur de coordonnées (4) est associé à l'élément (2) ou contient celui-ci directement, lequel est calculé en option par le biais de récurrences dans le réseau neuronal (1),
- **qu'**en option, le vecteur de coordonnées (4) est réalisé sous la forme d'une liste chaînée de manière dynamique (15) et, en option, ne contient que les coordonnées nécessaires avec et d'après leur indice temporel,
- **qu'**en option, chaque élément (2) lors de l'enregistrement contient un indice temporel explicite et un indice d'utilisateur explicite,
- **qu'**en option, un cryptage, une identification de l'utilisateur autorisé et une authentification des saisies est garantie par le biais du procédé de cryptographie mis en oeuvre, l'authenticité de la définition et des références étant, en option, garantie à l'aide de l'indice temporel et de l'indice d'utilisateur et les références étant, en option, cryptées,
- **qu'**en option, l'indice temporel de calcul étant associé à son dernier calcul par le biais d'une plage de données temporaire des différents éléments de la liste, cet indice temporel de calcul étant, en option, comparé avec l'indice temporel de calcul actuel avant d'effectuer le calcul et
- **qu'**en option, chaque élément (2) présente un renvoi à l'enregistrement associé d'une base de données de contenu qui servait de base pour générer la connaissance.

4. Réseau neuronal pour la gestion de connaissances assistée par ordinateur selon l'une des revendications précédentes, **caractérisé en ce**
- **que** le réseau neuronal (1) fait partie d'un serveur,
- qu'en option, il est connecté à un utilisateur par un système de dialogue par le biais de l'Internet et, en option, par le biais de l'intégration d'un système de commerce électronique sécurisé,
- qu'en option, la saisie pour le réseau neuronal (1) s'effectue par le biais d'un flux chronologique (13),
- qu'en option, des réseaux neuronaux décentralisés séparés (1') sont connectés au réseau neuronal central (1) par le biais d'une liaison de communication et, en option, sont réfléchis sur une demi-page et
- qu'en option, le système de dialogue présente une interface intuitive (24) qui permet comme saisie pour le réseau neuronal (1) une définition (25) de la paire interactive (5) à partir d'une sélection (26) de références (9) sélectionnées par le biais de commutateurs (27) et, en option, un titre abrégé et un résumé (29) ainsi que comme sortie l'affichage graphique d'un environnement local (28) des éléments (2) directement reliés et/ou non reliés dans la structure de données associative et présente d'autres outils (30).

5. Réseau neuronal pour la gestion de connaissances assistée par ordinateur selon l'une des revendications précédentes, **caractérisé en ce**
- **qu'**au réseau neuronal (1) sont associés des systèmes spécialement adaptés pour les applications dans le domaine des brevets, de la macroéconomie, des études de marché ou de l'analyse génétique,
- qu'un délai limite de publication est réalisé lors de la sortie spécialement pour une application dans le domaine des brevets, en option par le biais d'un filtre temporel correspondant, en option la connaissance d'un droit de propriété est identifiée sous la forme d'une copie avec des références (9) définitives non modifiables, des définitions (25) et avec un marqueur particulier, en option une nouveauté objective définie mathématiquement concernant l'ensemble des références (9) significatives ainsi qu'un niveau d'invention objectif défini mathématiquement peuvent être calculés par le biais de la masse concernant une telle connaissance de droit de propriété à un indice temporel donné par rapport à la structure de données associative et, en option, un renvoi au registre officiel associé avec la situation légale est inclus.

6. Réseau neuronal pour la gestion de connaissances assistée par ordinateur selon l'une des revendications précédentes, **caractérisé en ce**
- **qu'**aux éléments individuels est à chaque fois associé un champ de texte verbal complémentaire qui explique brièvement le contenu significatif de la quantité de connaissance de la définition ci-dessus ou la représente de manière abrégée par des mots-clés, aux éléments individuels étant associés, en option, des champs de texte à la fois explicatifs et raccourcissants sous la forme de titres abrégés et de résumés,
- **qu'**en option, chaque partie de la paire interactive est divisée en un abrégé et en une définition et un champ de texte est associé à celles-ci.

7. Réseau neuronal pour la gestion de connaissances assistée par ordinateur selon l'une des revendications précédentes, **caractérisé en ce**
- **que** des moyens de télécopie et/ou de télétransmission de données textuelles sont associés au réseau neuronal et
- **qu'**en option, il existe des moyens pour prendre en charge les signatures électroniques.

8. Procédé pour un réseau neuronal pour la gestion de connaissances assistée par ordinateur, **caractérisé en ce que**
- une saisie étendue a lieu dans une étape au niveau du réseau neuronal (1), laquelle a été, en option, préalablement convertie en un flux (13),
- dans une étape supplémentaire, il se produit une combinaison et une extension incrémentale de la structure de données associative du réseau neuronal (1) de cette saisie par accès à une zone de mémoire linéaire (14) de l'ordinateur, l'utilisation et l'arithmétique de pointeurs (17) spécifiques à l'ordinateur sur des parties de cette zone de mémoire (14) et une pile suffisamment grande pour les récurrences sur la totalité de la structure de données associative,
- dans une étape supplémentaire, le poids de l'élément (2) est actualisé ou calculé, le nouvel enregistrement d'un élément (2) correspondant à une addition et l'évaluation d'une référence (9) à une multiplication en utilisant les opérateurs mis en oeuvre pour calculer la métrique, la norme et le produit scalaire dans l'espace de Hilbert, lequel est de préférence réalisé sous forme euclidienne pour l'espace à n dimensions,
- dans un grand nombre optionnel des étapes précédentes, il se produit statistiquement une convergence de la structure de données associative du réseau neuronal (1) en une faible redondance,
- dans une autre étape, en utilisant les opérateurs pour calculer la métrique, la norme et le produit scalaire dans l'espace de Hilbert, une gestion des éléments individuels (2) et/ou une analyse entre ceux-ci est effectuée sur le calcul des masses du réseau neuronal (1),
- dans une dernière étape sont émises les résultats de la gestion ou de l'analyse.

9. Procédé pour un réseau neuronal pour la gestion de connaissances assistée par ordinateur selon l'une des revendications précédentes, **caractérisé en ce**
- **que** tous les éléments (2) sont enregistrés de manière dynamique et sont gérés de manière dynamique par le biais d'une liste (15) chaînée par un pointeur (17),
- **que** chaque élément (2) possède un élément NOT (18) associé explicitement qui, en option, présente un pointeur (17) sur la même paire interactive (5) et, en option, est généré avec la génération de l'élément (2), l'élément NOT (18) se différenciant, en option, de l'élément associé (2) dans le bit de poids faible de l'indice temporel,
- **qu'**en option, la génération des références (9) elle-même s'effectue par le biais d'un emboîtement des intervalles destiné à déterminer l'indice temporel dans la structure de données associative concrète de la zone de mémoire (14) associé de l'élément de référence et
- **que** celles-ci soient, en option, chaînées unilatéralement ou en alternance par le biais de pointeurs (17), ceux-ci étant gérés en option par le biais de listes de référence dynamiques (21, 22),
- **que** les références (9) elles-mêmes sont munies d'évaluations enregistrées de manière dynamique et, en option, spécifiques à l'utilisateur qui, en option, sont configurées par le biais du bit de poids faible de l'indice d'utilisateur explicite et qui, en option, sont gérées par le biais de listes d'évaluation (23) chaînées de manière dynamique,
- **que** les opérateurs destinés à calculer la métrique, la norme et le produit scalaire dans l'espace de Hilbert du réseau neuronal (1) sont appliqués sur les coordonnées et/ou les vecteurs de coordonnées (4) des éléments (2) déterminés de manière récurrente et, en option, les analyses se basent sur des méthodes de calcul vectoriel et
- **qu'**en option, un système de classification est généré par le réseau neuronal (1) à partir des références (9) les plus significatives de la structure de données associative et les éléments (2) associés.

10. Procédé pour un réseau neuronal pour la gestion de connaissances assistée par ordinateur selon l'une des revendications de procédé précédentes, **caractérisé en ce**
- **que**, par le biais de l'interface intuitive (24), une sélection (26) d'éléments (2) qui contiennent des notions similaires à celles dans la définition (25) est émise par le réseau neuronal (1) déjà pendant la saisie de la définition (25) de la paire interactive (5), une référence (9) à un élément (2) activée par l'utilisateur étant utilisée en option par le réseau neuronal (1) comme entrée formatrice,
- **qu'**en option, de nouvelles quantités (6) ou qualités (7) définissant la quantité de connaissance (11) décrite sont déterminées sémantiquement par l'utilisateur sur la base des quantités (6) ou des qualités (7) préalablement connues par les références (9) indiquées, les opérateurs AND, OR, NOT étant utilisés en option, ceux-ci étant, en option, transformés par le réseau neuronal (1) en termes logiques mathématiques de notions par le biais d'une analyse de la syntaxe et de la sémantique et résolus mathématiquement de manière récurrente par le biais des éléments de référence, un thésaurus pour les quantités (6) et les qualités (7) étant à chaque fois généré à partir de cela par le réseau neuronal (1), lequel contient ces notions structurées hiérarchiquement et évaluées conformément au poids des éléments (2) qu'elles utilisent,
- **qu'**en option, l'utilisateur joint à chaque élément (2) un développement technique concret contenu dans la quantité de connaissances (11) décrite sous la forme d'un résumé (29) et un titre abrégé, une recherche textuelle et/ou par le biais de combinaisons linguistiques appropriées pouvant être effectuée en option de manière habituelle dans les résumés (29) et les définitions (25) pour y retrouver des notions, une liste des notions indicée et triée à droite et à gauche avec renvoi à l'indice temporel de l'élément (2) qui le contient ou un pointeur (17) sur celui-ci étant généré en option par le réseau neuronal (1) à cet effet et
- **qu'**en option, le flux (13) servant à la saisie est généré automatiquement dans le prétraitement à partir de contenus textuels de bases de données de contenu en effectuant une projection assistée par ordinateur et compressée automatiquement à partir du contexte du contenu dans le format du flux (13), les possibilités de calcul et le thésaurus sur la base de connaissances du réseau neuronal (1) étant utilisés automatiquement en option lors du prétraitement.

11. Procédé pour un réseau neuronal pour la gestion de connaissances assistée par ordinateur selon l'une des revendications de procédé précédentes, l'innovation étant présentée en tant que développement technique particulier par le biais d'un système de gestion de connaissances assistée par ordinateur par le biais de définitions verbales et de références par rapport aux autres développements techniques préalablement connus,
**caractérisé en ce que**
- dans une première étape optionnelle du procédé, l'innovation concernant les hauts potentiels d'innovation est concentrée successivement par l'utilisateur par le biais de la nouveauté et du niveau d'invention calculés par le système de gestion de connaissances et présentés à l'utilisateur,
- dans une étape supplémentaire du procédé, les indications relatives à l'identité et à l'adresse de l'utilisateur ainsi que tous les champs de texte sont saisis par l'utilisateur,
- dans une étape supplémentaire du procédé, le développement en tant qu'innovation est enregistré dans le système de gestion de connaissances, celui-ci étant, en option, inaccessible et crypté de manière sécurisée spécifiquement à l'utilisateur sur un délai de publication,
- dans une étape supplémentaire optionnelle du procédé, une déclaration de droit de propriété provisoire est générée avec l'assistance informatique en utilisant des formules standard et
- dans une dernière étape optionnelle du procédé, celle-ci est transmise immédiatement à un organisme d'acceptation des droits de protection, cette déclaration étant, en option, signée avec une signature électronique.

12. Utilisation d'un réseau neuronal pour la gestion de connaissances assistée par ordinateur selon l'une des revendications précédentes, **caractérisée en ce**
- **qu'**il sert à la gestion ou aux analyses dans le domaine des brevets en tant que système expert pour les décisions objectives, la paire interactive (5) étant formée entre les solutions et les tâches ou les moyens et les effets dans le domaine technique, ou
- **qu'**il sert à la gestion ou aux analyses dans le domaine de la macroéconomie en tant que système expert pour les décisions économiques, la paire interactive (5) étant formée entre les secteurs économiques individuels et les domaines d'activités pouvant être séparés économiquement, ou
- **qu'**il sert à la gestion ou aux analyses dans le domaine du marketing en tant que système expert pour les décisions commerciales, la paire interactive (5)-étant formée entre les produits et les besoins des clients, ou
- **qu'**il sert à la gestion ou aux analyses dans le domaine de la génétique en tant que système expert pour le séquençage DNS, la paire interactive (5) étant formée entre les séquences génétiques et les fonctions biologiques, ou
- **qu'**il est réalisé dans l'encouragement de l'innovation pour déclarer les droits de protection des développements techniques innovants auprès des organismes d'acceptation des droits de protection.
